# EUROPEAN PATENT APPLICATION

(11) **EP 4 535 757 A1**
(43) Date of publication of application: **09.04.2025**
(21) Application number: 22949723.5
(22) Date of filing: 04.07.2022
(51) Int. Cl.: H04L 65/70, H04L 69/24, H04L 67/141, H04L 67/146

(54) **TRANSMISSION METHOD AND APPARATUS, AND TERMINAL**

(71) Applicant: Huawei Technologies Co., Ltd., Shenzhen, Guangdong 518129 (CN)
(72) Inventor: WANG, Yali, Shenzhen, Guangdong 518129 (CN); ZHANG, Xudong, Shenzhen, Guangdong 518129 (CN); WANG, Jian, Shenzhen, Guangdong 518129 (CN)
(74) Representative: Körber, Martin Hans
(86) International application number: PCT/CN2022/103758
(87) International publication number: WO 2024/007133

(57) **Abstract**

Embodiments of this application provide a transmission method and apparatus, and a terminal. The method includes: A source device receives first indication information sent by a sink device, where the first indication information indicates a first technology stack type corresponding to a first application. The source device establishes, based on the first indication information, a transmission channel that is based on the first technology stack type. The source device sends signaling and/or data of the first application to the sink device through the transmission channel. In embodiments of this application, the source device and the sink device may flexibly establish transmission channels based on different technology stack types, to implement signaling and data transmission.

## Description

### TECHNICAL FIELD

Embodiments of this application relate to the communication field, and more specifically, to a transmission method and apparatus, and a terminal.

### BACKGROUND

Currently, wireless projection technologies mainly include a Wi-Fi Miracast screen mirroring and projection technology and a digital living network alliance (digital living network alliance, DLNA) projection technology. The Wi-Fi Miracast screen mirroring and projection technology and the DLNA projection technology support transmission only based on an internet protocol (internet protocol, IP) technology stack, but do not support transmission based on other types of technology stacks. Consequently, for some devices that do not support the IP technology stack, signaling or data transmission cannot be implemented between a source (source) device and a sink (sink) device.

### SUMMARY

Embodiments of this application provide a transmission method and apparatus, and a terminal. A source device or a sink device may flexibly establish transmission channels based on different technology stack types, to implement signaling and data transmission.

According to a first aspect, a transmission method is provided. The method includes: receiving first indication information, where the first indication information indicates a first technology stack type corresponding to a first application; establishing, based on the first indication information, a transmission channel that is based on the first technology stack type; and sending signaling and/or data of the first application through the transmission channel, or receiving signaling and/or data of the first application through the transmission channel.

In this embodiment of this application, a device that receives the first indication information may determine, based on the first technology stack type indicated by the first indication information, the first technology stack type corresponding to the first application supported by a device that sends the first indication information. The device that receives the first indication information may establish a transmission channel based on the first technology stack type, to implement transmission of signaling and/or data applicable to an application. Transmission is flexible and efficient. For example, video data or audio data may be transmitted between the two devices.

In some possible implementations, the first technology stack type is a technology stack type that is of the first application and that is supported by the device that sends the first indication information.

In some possible implementations, the first application is a video projection application or an audio application.

In some possible implementations, the device that receives the first indication information may be a source device.

With reference to the first aspect, in some implementations of the first aspect, the receiving first indication information includes: receiving the first indication information from a first device; and the sending signaling and/or data of the first application through the transmission channel, or receiving signaling and/or data of the first application through the transmission channel includes: sending the signaling and/or the data of the first application to the first device through the transmission channel.

In this embodiment of this application, the source device may determine, by receiving the first indication information sent by a sink device, the first technology stack type corresponding to the first application supported by the sink device. The source device may establish the transmission channel based on the first technology stack type, to send, to the sink device through the transmission channel, the signaling and/or the data corresponding to the first application.

In some possible implementations, the first device may be the sink device.

With reference to the first aspect, in some implementations of the first aspect, the receiving the first indication information from a first device includes: receiving broadcast information from the first device, where the broadcast information includes the first indication information; and sending first request information to the first device, where the first request information is used to request to access the first device.

In this embodiment of this application, the sink device may include the first indication information in the broadcast information. In this way, the source device that receives the broadcast information may determine the first technology stack type corresponding to the first application in the sink device. The source device may establish the transmission channel based on the first technology stack type, to send, to the sink device through the transmission channel, the signaling and/or the data corresponding to the first application.

In some possible implementations, the broadcast information may further carry indication information that indicates a technology stack type of the second application.

In some possible implementations, the broadcast information is used by a second device to discover the first device.

In some possible implementations, the second device may be a source device.

In some possible implementations, the broadcast information carries identification information of the first device.

With reference to the first aspect, in some implementations of the first aspect, the broadcast information includes a SparkLink basic access (SparkLink basic, SLB) system message or a SparkLink low energy access (SparkLink low energy, SLE) broadcast message.

The technical solution in embodiments of this application may be applied to a SparkLink wireless projection technology. The sink device may include the first indication information in the SLB system message or the SLE broadcast message. In this way, the source device that receives the SLB system message or the SLE broadcast message may determine the first technology stack type corresponding to the first application in the sink device. The source device may establish the transmission channel based on the first technology stack type, to send, to the sink device through the transmission channel, the signaling and/or the data corresponding to the first application.

With reference to the first aspect, in some implementations of the first aspect, before the establishing a transmission channel that is based on the first technology stack type, the method further includes: determining that the first technology stack type matches a second protocol stack type corresponding to the first application in a second device.

In this embodiment of this application, the source device may establish the transmission channel based on the first technology stack type when determining that the first technology stack type that corresponds to the first application in the sink device and that is indicated by the first indication information matches a second technology stack type corresponding to the first application in the source device. In this way, a resource waste caused when the source device establishes the transmission channel can be avoided. In addition, in a device discovery phase, a device that meets the technology stack type corresponding to the first application is quickly discovered, and a transmission channel is established with the device, so that end-to-end connection time of the first application (for example, a video projection application) can be shortened.

In some possible implementations, that the first technology stack type matches the second technology stack type may be understood as that the first technology stack type is the same as the second technology stack type. Alternatively, this may be understood that both the first technology stack type and the second technology stack type belong to a same technology stack (for example, an IP technology stack or a non-IP (non-IP) technology stack).

With reference to the first aspect, in some implementations of the first aspect, before the receiving the first indication information from a first device, the method further includes: sending first request information to the first device, where the first request information is used to request to access the first device; and the receiving the first indication information from a first device includes: receiving first response information for the first request information from the first device, where the first response information includes the first indication information.

In this embodiment of this application, the sink device may include the first indication information in the first response information. In this way, the source device that receives the first response information may determine the first technology stack type corresponding to the first application in the sink device. The source device may establish the transmission channel based on the first technology stack type, to send, to the sink device through the transmission channel, the signaling and/or the data corresponding to the first application.

In some possible implementations, the second response information may further carry indication information that indicates a technology stack type of a second application.

With reference to the first aspect, in some implementations of the first aspect, the first request information includes identification information of the first application.

In this embodiment of this application, the source device may include the identifier of the first application in the first request information sent to the sink device. In this way, the sink device may include the first technology stack type corresponding to the first application in the first response information sent to the source device. In this way, signaling overheads of the sink device can be reduced. In addition, in a device discovery phase, a device that meets the technology stack type corresponding to the first application is quickly discovered, and a transmission channel is established with the device, so that end-to-end connection time of the first application (for example, a video projection application) can be shortened.

With reference to the first aspect, in some implementations of the first aspect, the first request information is carried in an access request frame, and the first response information is carried in an access response frame.

The technical solution in embodiments of this application may be applied to the SparkLink wireless projection technology. The sink device may include the first indication information in the access response frame. In this way, the source device that receives the access response frame may determine the first technology stack type corresponding to the first application in the sink device. The source device may establish the transmission channel based on the first technology stack type, to send, to the sink device through the transmission channel, the signaling and/or the data corresponding to the first application.

With reference to the first aspect, in some implementations of the first aspect, before the receiving the first indication information from a first device, the method further includes: sending second request information to the first device, where the second request information is used to request to perform capability negotiation with the first device; and the receiving the first indication information from a first device includes: receiving second response information for the second request information from the first device, where the second response information includes the first indication information.

In this embodiment of this application, the sink device may include the first indication information in the second response information. In this way, the source device that receives the second response information may determine the first technology stack type corresponding to the first application in the sink device. The source device may establish the transmission channel based on the first technology stack type, to send, to the sink device through the transmission channel, the signaling and/or the data corresponding to the first application.

With reference to the first aspect, in some implementations of the first aspect, the second request information is carried in a video projection application capability negotiation request message, and the second response information is carried in a video projection application capability negotiation response message.

The technical solution in embodiments of this application may be applied to the SparkLink wireless projection technology. The sink device may include the first indication information in the video projection application capability negotiation response message. In this way, the source device that receives the video projection application capability negotiation response message may determine the first technology stack type corresponding to the first application in the sink device. The source device may establish the transmission channel based on the first technology stack type, to send, to the sink device through the transmission channel, the signaling and/or the data corresponding to the first application.

With reference to the first aspect, in some implementations of the first aspect, the second request information includes identification information of the first application.

In this embodiment of this application, the source device may include an identifier of the first application in the second request information. In this way, the second response information sent by the sink device to the source device may carry the indication information that indicates the first technology stack type corresponding to the first application. This helps reduce signaling overheads of the sink device.

With reference to the first aspect, in some implementations of the first aspect, the second request information includes second indication information, and the second indication information indicates a second technology stack type corresponding to the first application.

In this embodiment of this application, the source device may include the second indication information in the second request information. After receiving the second request information, the sink device may learn of the second technology stack type corresponding to the first application in the source device. In this way, when the first technology stack type matches the second technology stack type, the sink device may establish the transmission channel based on the first technology stack type.

In some possible implementations, the device that receives the first indication information may be the sink device.

With reference to the first aspect, in some implementations of the first aspect, the receiving first indication information includes: receiving the first indication information sent by a second device; and the sending signaling and/or data of the first application through the transmission channel, or receiving signaling and/or data of the first application through the transmission channel includes: receiving the signaling and/or the data of the first application sent by the second device through the transmission channel.

In this embodiment of this application, the sink device may determine, by receiving the first indication information sent by the source device, the first technology stack type corresponding to the first application in the source device. The sink device may establish the transmission channel based on the first technology stack type, so that the sink device can receive, through the transmission channel, the signaling and/or the data that correspond to the first application and that are sent by the source device.

In some possible implementations, the second device may be a source device.

With reference to the first aspect, in some implementations of the first aspect, before the receiving the first indication information sent by a second device, the method further includes: sending broadcast information, where the broadcast information includes second indication information, and the second indication information indicates a second technology stack type corresponding to the first application.

In this embodiment of this application, the sink device may include the second indication information in the broadcast information. In this way, the source device that receives the broadcast information may determine the second technology stack type corresponding to the first application in the sink device. The source device may establish the transmission channel based on the second technology stack type, to send, to the sink device through the transmission channel, the signaling and/or the data corresponding to the first application.

With reference to the first aspect, in some implementations of the first aspect, the broadcast information includes a SparkLink basic SLB system message or a SparkLink low energy SLE broadcast message.

The technical solution in embodiments of this application may be applied to a SparkLink wireless projection technology. The sink device may include the second indication information in the SLB system message or the SLE broadcast message. In this way, the source device that receives the SLB system message or the SLE broadcast message may determine the second technology stack type corresponding to the first application in the sink device. The source device may establish the transmission channel based on the second technology stack type, to send, to the sink device through the transmission channel, the signaling and/or the data corresponding to the first application.

With reference to the first aspect, in some implementations of the first aspect, before the receiving the first indication information sent by a second device, the method further includes: receiving first request information sent by the second device, where the first request information is used to request to access a first device, and sending first response information for the first request information to the second device, where the first response information includes second indication information, and the second indication information indicates a second technology stack type corresponding to the first application.

In this embodiment of this application, the sink device may include the second indication information in the first response information. In this way, the source device that receives the first response information may determine the second technology stack type corresponding to the first application in the sink device. The source device may establish the transmission channel based on the second technology stack type, to send, to the sink device through the transmission channel, the signaling and/or the data corresponding to the first application.

With reference to the first aspect, in some implementations of the first aspect, the first request information includes identification information of the first application.

In this embodiment of this application, the source device may include an identifier of the first application in the first request information sent to the sink device. In this way, the sink device may include the second technology stack type corresponding to the first application in the first response information sent to the source device. In this way, signaling overheads of the sink device can be reduced.

With reference to the first aspect, in some implementations of the first aspect, the first request information is carried in an access request frame, and the first response information is carried in an access response frame.

The technical solution in embodiments of this application may be applied to the SparkLink wireless projection technology. The sink device may include the second indication information in the access response frame. In this way, the source device that receives the access response frame may determine the second technology stack type corresponding to the first application in the sink device. The source device may establish the transmission channel based on the second technology stack type, to send, to the sink device through the transmission channel, the signaling and/or the data corresponding to the first application.

With reference to the first aspect, in some implementations of the first aspect, the receiving the first indication information sent by a second device includes: receiving a video application transmission request message sent by the second device, where the video application transmission request message includes the first indication information.

The technical solution in this embodiment of this application may be applied to the SparkLink wireless projection technology. The source device may include the first indication information in the video application transmission request message. In this way, the sink device that receives the video application transmission request message may determine the first technology stack type corresponding to the first application in the source device. The sink device may establish the transmission channel based on the first technology stack type, so that the sink device can receive, through the transmission channel, the signaling and/or the data that correspond to the first application and that are sent by the source device.

With reference to the first aspect, in some implementations of the first aspect, the receiving the first indication information sent by a second device includes: receiving second request information sent by the second device, where the second request information is used to request to perform capability negotiation with the first device, and the second request information includes the first indication information.

In this embodiment of this application, the source device may include the first indication information in the second request information. In this way, the sink device that receives the second request information may determine the first technology stack type corresponding to the first application in the source device. The sink device may establish the transmission channel based on the first technology stack type, so that the sink device can receive, through the transmission channel, the signaling and/or the data that correspond to the first application and that are sent by the source device.

With reference to the first aspect, in some implementations of the first aspect, the method further includes: sending second response information for the second request information to the second device, where the second response information includes second indication information, and the second indication information indicates a second technology stack type corresponding to the first application.

In this embodiment of this application, the sink device may include the second indication information in the second response information. In this way, the source device that receives the second response information may determine the second technology stack type corresponding to the first application in the sink device. The source device may establish the transmission channel based on the second technology stack type, to send, to the sink device through the transmission channel, the signaling and/or the data corresponding to the first application.

With reference to the first aspect, in some implementations of the first aspect, the second request information is carried in a video projection application capability negotiation request message, and the second response information is carried in a video projection application capability negotiation response message.

The technical solution in this embodiment of this application may be applied to the SparkLink wireless projection technology. The source device may include the first indication information in the video projection application capability negotiation request message. In this way, the sink device that receives the video projection application capability negotiation request message may determine the first technology stack type corresponding to the first application in the source device. The sink device may establish the transmission channel based on the first technology stack type, so that the sink device can receive, through the transmission channel, the signaling and/or the data that correspond to the first application and that are sent by the source device.

With reference to the first aspect, in some implementations of the first aspect, the first technology stack type includes an IP technology stack or a non-IP technology stack.

According to a second aspect, a transmission apparatus is provided. The apparatus includes: a transceiver unit, configured to receive first indication information, where the first indication information indicates a first technology stack type corresponding to a first application; a channel establishment unit, configured to establish, based on the first indication information, a transmission channel that is based on the first technology stack type; and the transceiver unit is further configured to: send signaling and/or data of the first application through the transmission channel, or receive signaling and/or data of the first application through the transmission channel.

With reference to the second aspect, in some implementations of the second aspect, the transceiver unit is specifically configured to: receive the first indication information from a first device; and send the signaling and/or the data of the first application to the first device through the transmission channel.

With reference to the second aspect, in some implementations of the second aspect, the transceiver unit is specifically configured to: receive broadcast information from the first device, where the broadcast information includes the first indication information; and the transceiver unit is further configured to send first request information to the first device, where the first request information is used to request to access the first device.

With reference to the second aspect, in some implementations of the second aspect, the broadcast information includes an SLB system message or an SLE broadcast message.

With reference to the second aspect, in some implementations of the second aspect, the apparatus further includes: a determining unit, configured to: before the channel establishment unit establishes the transmission channel based on the first technology stack type, determine that the first technology stack type matches a second protocol stack type corresponding to the first application in a second device.

With reference to the second aspect, in some implementations of the second aspect, the transceiver unit is further configured to: before receiving the first indication information from the first device, send first request information to the first device, where the first request information is used to request to access the first device; and the transceiver unit is specifically configured to: receive first response information for the first request information from the first device, where the first response information includes the first indication information.

With reference to the second aspect, in some implementations of the second aspect, the first request information includes identification information of the first application.

With reference to the second aspect, in some implementations of the second aspect, the first request information is carried in an access request frame, and the first response information is carried in an access response frame.

With reference to the second aspect, in some implementations of the second aspect, the transceiver unit is further configured to: before receiving the first indication information from the first device, send second request information to the first device, and the second request information is used to request to perform capability negotiation with the first device; and the transceiver unit is specifically configured to receive second response information for the second request information from the first device, where the second response information includes the first indication information.

With reference to the second aspect, in some implementations of the second aspect, the second request information is carried in a video projection application capability negotiation request message, and the second response information is carried in a video projection application capability negotiation response message.

With reference to the second aspect, in some implementations of the second aspect, the second request information includes identification information of the first application.

With reference to the second aspect, in some implementations of the second aspect, the second request information includes second indication information, and the second indication information indicates a second technology stack type corresponding to the first application.

With reference to the second aspect, in some implementations of the second aspect, the transceiver unit is specifically configured to: receive the first indication information sent by a second device; and receive the signaling and/or the data of the first application sent by the second device through the transmission channel.

With reference to the second aspect, in some implementations of the second aspect, the transceiver unit is further configured to: before receiving the first indication information sent by the second device, send broadcast information, where the broadcast information includes second indication information, and the second indication information indicates a second technology stack type corresponding to the first application; and receiving first access request information sent by the second device, where the first access request information is used to request to access a first device.

With reference to the second aspect, in some implementations of the second aspect, the broadcast information includes an SLB system message or an SLE broadcast message.

With reference to the second aspect, in some implementations of the second aspect, the transceiver unit is further configured to: before receiving the first indication information sent by the second device, receive first request information sent by the second device, where the first request information is used to request to access a first device; and send first response information for the first request information to the second device, where the first response information includes second indication information, and the second indication information indicates a second technology stack type corresponding to the first application.

With reference to the second aspect, in some implementations of the second aspect, the first request information is carried in an access request frame, and the first response information is carried in an access response frame.

With reference to the second aspect, in some implementations of the second aspect, the transceiver unit is specifically configured to receive a video application transmission request message sent by the second device, where the video application transmission request message includes the first indication information.

With reference to the second aspect, in some implementations of the second aspect, the transceiver unit is specifically configured to: receive second request information sent by the second device, where the second request information is used to request to perform capability negotiation with the first device, and the second request information includes the first indication information.

With reference to the second aspect, in some implementations of the second aspect, the transceiver unit is further configured to send second response information for the second request information to the second device, where the second response information includes second indication information, and the second indication information indicates a second technology stack type corresponding to the first application.

With reference to the second aspect, in some implementations of the second aspect, the second request information is carried in a video projection application capability negotiation request message, and the second response information is carried in a video projection application capability negotiation response message.

With reference to the second aspect, in some implementations of the second aspect, the first technology stack type includes an internet protocol IP technology stack or a non-IP technology stack.

According to a third aspect, a transmission apparatus is provided. The transmission apparatus includes a first protocol layer processing unit, a third protocol layer processing unit, and a fourth protocol layer processing unit. The first protocol layer processing unit is configured to send a device information disclosure request message to the third protocol layer processing unit. The device information disclosure request message includes identification information of a first application and identification information of a first technology stack type. The third protocol layer processing unit is configured to receive the device information disclosure request message sent by the first protocol layer processing unit, and send first indication information to the fourth protocol layer processing unit. The first indication information indicates a first technology stack type corresponding to the first application. The fourth protocol layer processing unit is configured to: receive the first indication information sent by the third protocol layer processing unit, and send the first indication information.

With reference to the third aspect, in some implementations of the third aspect, the first protocol layer processing unit is specifically configured to send the device information disclosure request message to a device discovery function unit in the third protocol layer processing unit.

With reference to the third aspect, in some implementations of the third aspect, the device information disclosure request information further includes one or more of a broadcast parameter, service data, a discovery level, and the like.

With reference to the third aspect, in some implementations of the third aspect, the first indication information includes the identification information of the first application and identification information of the first technology stack type.

With reference to the third aspect, in some implementations of the third aspect, the third protocol layer processing unit is specifically configured to send a scanning request message to the fourth protocol layer processing unit, where the scanning request message includes the first indication information.

With reference to the third aspect, in some implementations of the third aspect, the third protocol layer processing unit is specifically configured to send a broadcast message to the fourth protocol layer processing unit, where the broadcast message includes the first indication information. The fourth protocol layer processing unit is configured to send the broadcast message.

With reference to the third aspect, in some implementations of the third aspect, the third protocol layer processing unit is specifically configured to send a system message to the fourth protocol layer processing unit, where the system message includes the first indication information. The fourth protocol layer processing unit is configured to send the system message.

According to a fourth aspect, a transmission apparatus is provided. The transmission apparatus includes a first protocol layer processing unit, a second protocol layer processing unit, a third protocol layer processing unit, and a fourth protocol layer processing unit. The fourth protocol layer processing unit is configured to receive first indication information and send the first indication information to the third protocol layer processing unit. The first indication information indicates a first technology stack type corresponding to a first application. The third protocol layer processing unit is configured to receive the first indication information sent by the fourth protocol layer processing unit, and parse the first indication information to obtain identification information of the first application and identification information of the first technology stack type. The third protocol layer processing unit is further configured to send the identification information of the first application and the identification information of the first technology stack type to the first protocol layer processing unit. The first protocol layer processing unit is further configured to: receive the identification information of the first application and the identification information of the first technology stack type that are sent by the third protocol layer processing unit, send the identification information of the first application and the identification information of the first technology stack type to the second protocol layer processing unit, and send a first instruction to the third protocol layer processing unit. The first instruction indicates the third protocol layer processing unit to establish a transmission channel based on the first technology stack type. The second protocol layer processing unit is configured to: receive the identification information of the first application and the identification information of the first technology stack type that are sent by the first protocol layer processing unit, and select, based on the identification information of the first technology stack type, a first control and management module to perform capability negotiation. The third protocol layer processing unit is further configured to establish, based on the first instruction, a transmission channel that is based on the first technology stack type.

With reference to the fourth aspect, in some implementations of the fourth aspect, the second protocol layer processing unit includes the first control and management module and a second control and management module. The first control and management module has a correspondence with the first technology stack type, and the second control and management module has a correspondence with a second technology stack type.

With reference to the fourth aspect, in some implementations of the fourth aspect, the first protocol layer processing unit is further configured to: before receiving the identification information of the first application and the identification information of the first technology stack type that are sent by the third protocol layer processing unit, send a device discovery request to the third protocol layer processing unit. The device discovery request includes a scanning parameter, and the scanning parameter includes the identification information of the first application and the identification information of the first technology stack type. The third protocol layer processing unit is further configured to receive the device discovery request sent by the first protocol layer processing unit, and send a scanning configuration command to the fourth protocol layer processing unit. The scanning configuration command indicates that the scanning parameter includes the identification information of the first application and the identification information of the first technology stack type. The fourth protocol layer processing unit is further configured to receive the scanning configuration command sent by the third protocol layer processing unit. The fourth protocol layer processing unit is further configured to receive the first indication information and report a scanning result based on the scanning configuration command.

With reference to the fourth aspect, in some implementations of the fourth aspect, the device discovery request further includes a filtering policy and an access layer type indication.

With reference to the fourth aspect, in some implementations of the fourth aspect, the scanning configuration command includes one or more of a scanning parameter configuration command, a filtering condition configuration command, and a filtering enable command.

With reference to the fourth aspect, in some implementations of the fourth aspect, the fourth protocol layer processing unit is specifically configured to receive broadcast information based on the scanning configuration command, where the broadcast information includes the first indication information.

With reference to the fourth aspect, in some implementations of the fourth aspect, the second protocol layer processing unit may be integrated into the first protocol layer processing unit.

With reference to the fourth aspect, in some implementations of the fourth aspect, the first technology stack type includes an IP technology stack or a non-IP technology stack.

With reference to the fourth aspect, in some implementations of the fourth aspect, the second protocol layer processing unit is further configured to select, based on the identification information of the first technology stack type, the first control and management module to perform session management, where session management includes session establishment, release, or termination.

With reference to the fourth aspect, in some implementations of the fourth aspect, the second protocol layer processing unit is specifically configured to select, based on the identification information of the first technology stack type, the first control and management module to negotiate a video encoding and decoding capability.

With reference to the fourth aspect, in some implementations of the fourth aspect, the fourth protocol layer processing unit is specifically configured to control an SLB air interface and/or an SLE air interface to receive the first indication information.

With reference to the fourth aspect, in some implementations of the fourth aspect, the first protocol layer processing unit may correspond to a SparkLink basic application layer, the third protocol layer processing unit may correspond to a SparkLink basic service layer, and the fourth protocol layer processing unit may correspond to a SparkLink access layer.

The first protocol layer processing unit, the second protocol layer processing unit, the third protocol layer processing unit, and the fourth protocol layer processing unit may be physical units, or may be virtual units.

According to a fifth aspect, a transmission apparatus is provided. The transmission apparatus includes a first protocol layer processing unit, a second protocol layer processing unit, a third protocol layer processing unit, and a fourth protocol layer processing unit. The first protocol layer processing unit is configured to send data and identification information of a first technology stack type to the second protocol layer processing unit. The second protocol layer processing unit is configured to receive the data and the identification information of the first technology stack type that are sent by the first protocol layer processing unit. The second protocol layer processing unit is further configured to select, based on the identification information of the first technology stack type, a first data encapsulation module to encapsulate the data, to obtain encapsulated data. The second protocol layer processing unit is further configured to send the encapsulated data to the third protocol layer processing unit. The third protocol layer processing unit is configured to receive the encapsulated data sent by the second protocol layer processing unit, and process the encapsulated data to obtain processed data. The third protocol layer processing unit is further configured to send the processed data to the fourth protocol layer processing unit. The fourth protocol layer processing unit is further configured to receive the processed data sent by the third protocol layer processing unit, and send the processed data to a peer device.

With reference to the fifth aspect, in some implementations of the fifth aspect, the second protocol layer processing unit includes the first data encapsulation module and a second data encapsulation module. The first data encapsulation module has a correspondence with the first technology stack type, and the second data encapsulation module has a correspondence with a second technology stack type.

With reference to the fifth aspect, in some implementations of the fifth aspect, the third protocol layer processing unit is specifically configured to fragment or aggregate the encapsulated data, select a data transmission mode, and select an interface for transmitting data.

With reference to the fifth aspect, in some implementations of the fifth aspect, the fourth protocol layer processing unit is specifically configured to control an SLB air interface and/or an SLE air interface to send the processed data to the peer end.

According to a sixth aspect, a transmission apparatus is provided. The transmission apparatus includes a first protocol layer processing unit, a second protocol layer processing unit, a third protocol layer processing unit, and a fourth protocol layer processing unit. The fourth protocol layer processing unit is configured to receive processed data sent by a peer device, and send the processed data to the third protocol layer processing unit. The third protocol layer processing unit is configured to receive the processed data sent by the fourth protocol layer processing unit, and obtain encapsulated data based on the processed data. The third protocol layer processing unit is further configured to send the encapsulated data to the second protocol layer processing unit. The second protocol layer processing unit is further configured to decapsulate the encapsulated data to obtain decapsulated data. The second protocol layer processing unit is further configured to send the decapsulated data to the first protocol layer processing unit. The first protocol layer processing unit is further configured to receive the decapsulated data sent by the second protocol layer processing unit.

The first protocol layer processing unit, the second protocol layer processing unit, the third protocol layer processing unit, and the fourth protocol layer processing unit may be physical units, or may be virtual units.

According to a seventh aspect, a transmission method is provided, where the transmission method is applied to a transmission apparatus including a first protocol layer processing unit, a third protocol layer processing unit, and a fourth protocol layer processing unit, and the transmission method includes: The first protocol layer processing unit sends a device information disclosure request message to the third protocol layer processing unit, where the device information disclosure request message includes identification information of a first application and identification information of a first technology stack type; the third protocol layer processing unit receives the device information disclosure request message sent by the first protocol layer processing unit, and sends first indication information to the fourth protocol layer processing unit, where the first indication information indicates a first technology stack type corresponding to the first application; and the fourth protocol layer processing unit receives the first indication information sent by the third protocol layer processing unit, and sends the first indication information.

With reference to the seventh aspect, in some implementations of the seventh aspect, the first indication information includes the identification information of the first application and identification information of the first technology stack type.

With reference to the seventh aspect, in some implementations of the seventh aspect, that the third protocol layer processing unit sends first indication information to the fourth protocol layer processing unit includes: The third protocol layer processing unit sends a scanning request message to the fourth protocol layer processing unit, where the scanning request message includes the first indication information.

With reference to the seventh aspect, in some implementations of the seventh aspect, that the third protocol layer processing unit sends the first indication information to the fourth protocol layer processing unit includes: The third protocol layer processing unit sends a broadcast message to the fourth protocol layer processing unit, where the broadcast message includes the first indication information; and the fourth protocol layer processing unit sends the broadcast message.

With reference to the seventh aspect, in some implementations of the seventh aspect, that the third protocol layer processing unit sends the first indication information to the fourth protocol layer processing unit includes: The third protocol layer processing unit sends a system message to the fourth protocol layer processing unit, where the system message includes the first indication information; and the fourth protocol layer processing unit sends the system message.

According to an eighth aspect, a transmission method is provided, where the transmission method is applied to a transmission apparatus including a first protocol layer processing unit, a second protocol layer processing unit, a third protocol layer processing unit, and a fourth protocol layer processing unit, and the transmission method includes: The fourth protocol layer processing unit receives first indication information and sends the first indication information to the third protocol layer processing unit, where the first indication information indicates a first technology stack type corresponding to a first application; the third protocol layer processing unit receives the first indication information sent by the fourth protocol layer processing unit, and parses the first indication information to obtain identification information of the first application and identification information of the first technology stack type; the third protocol layer processing unit sends the identification information of the first application and the identification information of the first technology stack type to the first protocol layer processing unit; the first protocol layer processing unit receives the identification information of the first application and the identification information of the first technology stack type that are sent by the third protocol layer processing unit; the first protocol layer processing unit sends the identification information of the first application and the identification information of the first technology stack type to the second protocol layer processing unit, and sends a first instruction to the third protocol layer processing unit, where the first instruction indicates the third protocol layer processing unit to establish a transmission channel based on the first technology stack type; the second protocol layer processing unit receives the identification information of the first application and the identification information of the first technology stack type that are sent by the first protocol layer processing unit, and selects, based on the identification information of the first technology stack type, a first control and management module to perform capability negotiation; and the third protocol layer processing unit establishes, based on the first instruction, a transmission channel that is based on the first technology stack type.

With reference to the eighth aspect, in some implementations of the eighth aspect, the second protocol layer processing unit includes the first control and management module and a second control and management module. The first control and management module has a correspondence with the first technology stack type, and the second control and management module has a correspondence with a second technology stack type.

With reference to the eighth aspect, in some implementations of the eighth aspect, the method further includes: Before receiving the identification information of the first application and the identification information of the first technology stack type that are sent by the third protocol layer processing unit, the first protocol layer processing unit sends a device discovery request to the third protocol layer processing unit, where the device discovery request includes a scanning parameter, and the scanning parameter includes the identification information of the first application and the identification information of the first technology stack type; the third protocol layer processing unit receives the device discovery request sent by the first protocol layer processing unit, and sends a scanning configuration command to the fourth protocol layer processing unit, where the scanning configuration command indicates that the scanning parameter includes the identification information of the first application and the identification information of the first technology stack type; the fourth protocol layer processing unit receives the scanning configuration command sent by the third protocol layer processing unit; and the fourth protocol layer processing unit receives the first indication information and report a scanning result based on the scanning configuration command.

With reference to the eighth aspect, in some implementations of the eighth aspect, that the fourth protocol layer processing unit receives the first indication information based on the scanning configuration command includes: The fourth protocol layer processing unit receives broadcast information based on the scanning configuration command, where the broadcast information includes the first indication information.

With reference to the eighth aspect, in some implementations of the eighth aspect, the second protocol layer processing unit may be integrated into the first protocol layer processing unit.

With reference to the eighth aspect, in some implementations of the eighth aspect, the first technology stack type includes an IP technology stack or a non-IP technology stack.

With reference to the eighth aspect, in some implementations of the eighth aspect, the transmission method further includes: The second protocol layer processing unit selects, based on the identification information of the first technology stack type, the first control and management module to perform session management, where session management includes session establishment, release, or termination.

With reference to the eighth aspect, in some implementations of the eighth aspect, that the second protocol layer processing unit selects, based on the identification information of the first technology stack type, a first control and management module to perform capability negotiation includes: The second protocol layer processing unit selects, based on the identification information of the first technology stack type, the first control and management module to negotiate a video encoding and decoding capability.

With reference to the eighth aspect, in some implementations of the eighth aspect, the fourth protocol layer processing unit is specifically configured to control an SLB air interface and/or an SLE air interface to receive the first indication information.

With reference to the eighth aspect, in some implementations of the eighth aspect, the first protocol layer processing unit may correspond to a SparkLink basic application layer, the third protocol layer processing unit may correspond to a SparkLink basic service layer, and the fourth protocol layer processing unit may correspond to a SparkLink access layer.

According to a ninth aspect, a transmission method is provided, where the transmission method is applied to a transmission apparatus including a first protocol layer processing unit, a second protocol layer processing unit, a third protocol layer processing unit, and a fourth protocol layer processing unit, and the transmission method includes: The first protocol layer processing unit sends data and identification information of a first technology stack type to the second protocol layer processing unit; the second protocol layer processing unit receives the data and the identification information of the first technology stack type that are sent by the first protocol layer processing unit; the second protocol layer processing unit selects, based on the identification information of the first technology stack type, a first data encapsulation module to encapsulate the data, to obtain encapsulated data; the second protocol layer processing unit sends the encapsulated data to the third protocol layer processing unit; the third protocol layer processing unit receives the encapsulated data sent by the second protocol layer processing unit, and processes the encapsulated data to obtain processed data; the third protocol layer processing unit sends the processed data to the fourth protocol layer processing unit; and the fourth protocol layer processing unit receives the processed data sent by the third protocol layer processing unit, and sends the processed data to a peer device.

With reference to the ninth aspect, in some implementations of the ninth aspect, the second protocol layer processing unit includes the first data encapsulation module and a second data encapsulation module. The first data encapsulation module has a correspondence with the first technology stack type, and the second data encapsulation module has a correspondence with a second technology stack type.

With reference to the ninth aspect, in some implementations of the ninth aspect, that the third protocol layer processing unit processes the encapsulated data includes: The third protocol layer processing unit fragments or aggregates the encapsulated data, selects a data transmission mode, and selects an interface for transmitting data.

With reference to the ninth aspect, in some implementations of the ninth aspect, the fourth protocol layer processing unit is specifically configured to control an SLB air interface and/or an SLE air interface to send the processed data to the peer end.

According to a tenth aspect, a transmission method is provided, where the transmission method is applied to a transmission apparatus including a first protocol layer processing unit, a second protocol layer processing unit, a third protocol layer processing unit, and a fourth protocol layer processing unit, and the transmission method includes: The fourth protocol layer processing unit receives processed data sent by a peer device, and sends the processed data to the third protocol layer processing unit; the third protocol layer processing unit receives the processed data sent by the fourth protocol layer processing unit, and obtains encapsulated data based on the processed data; the third protocol layer processing unit sends the encapsulated data to the second protocol layer processing unit; the second protocol layer processing unit decapsulates the encapsulated data to obtain decapsulated data; the second protocol layer processing unit sends the decapsulated data to the first protocol layer processing unit; and the first protocol layer processing unit receives the decapsulated data sent by the second protocol layer processing unit.

For example, the transmission apparatus is a source device. The source device includes the second protocol layer processing unit, and the second protocol layer processing unit includes a control and management module and a data encapsulation module that correspond to an IP technology stack, and a control and management module and a data encapsulation module that correspond to a non-IP technology stack. The source device may receive, through an SLE air interface (or an SLB air interface) at a SparkLink access layer, broadcast information sent by the sink device. After receiving the broadcast information, the SparkLink access layer sends the broadcast information to a control plane function module at the SparkLink basic service layer. The control plane function module may parse the broadcast information, to obtain information about the non-IP technology stack corresponding to the first application in the sink device. The control plane function module may send a parsing result to the SparkLink application layer. After obtaining the parsing result, the SparkLink application layer may send an identifier of the first application and identification information of the IP technology stack to the second protocol layer processing unit. The second protocol layer processing unit may determine the control and management module and the data encapsulation module that are based on the non-IP technology stack. Therefore, the second protocol layer processing unit may perform capability negotiation and session management based on the control and management module corresponding to the non-IP technology stack, and encapsulate data based on the data encapsulation module corresponding to the non-IP technology stack.

The SparkLink application layer may send video data (or audio data) to the second protocol layer processing unit, so that the data encapsulation module based on the non-IP technology stack in the second protocol layer processing unit may encapsulate the video data. The second protocol layer processing unit may send the encapsulated data to the SparkLink basic service layer. A data transmission mode selection module at the SparkLink basic service layer may select a data transmission mode. A data fragmentation and aggregation module may fragment or aggregate the encapsulated data. A converge and transmission module may select an air interface for data transmission. For example, for data with high transmission reliability, the converge and transmission module may control the SLE air interface and the SLB air interface to perform redundant transmission. For another example, for data in a low power consumption scenario, the converge and transmission module may control the SLE air interface to transmit the data.

According to an eleventh aspect, an apparatus is provided. The apparatus includes: a memory, configured to store computer instructions; and a processor, configured to execute the computer instructions stored in the memory, so that the apparatus performs the method in the first aspect, the seventh aspect, the eighth aspect, the ninth aspect, or the tenth aspect.

According to a twelfth aspect, a terminal is provided. The terminal includes the apparatus according to any one of the second aspect, the third aspect, the fourth aspect, the fifth aspect, the sixth aspect, or the eleventh aspect.

According to a thirteenth aspect, a computer program product is provided. The computer program product includes computer program code. When the computer program code is run on a computer, the computer is enabled to perform the method in the first aspect, the seventh aspect, the eighth aspect, the ninth aspect, or the tenth aspect.

The computer program code may be completely or partially stored in a first storage medium. The first storage medium may be encapsulated with a processor, or encapsulated separately from a processor. This is not specifically limited in embodiments of this application.

According to a fourteenth aspect, a computer-readable medium is provided. The computer-readable medium stores program code. When the computer program code is run on a computer, the computer is enabled to perform the method in the first aspect, the seventh aspect, the eighth aspect, the ninth aspect, or the tenth aspect.

According to a fifteenth aspect, embodiments of this application provide a chip system. The chip system includes a processor, configured to invoke a computer program or computer instructions stored in a memory, so that the processor performs the method according to the first aspect, the seventh aspect, the eighth aspect, the ninth aspect, or the tenth aspect.

With reference to the fifteenth aspect, in a possible implementation, the processor is coupled to the memory through an interface.

With reference to the fifteenth aspect, in a possible implementation, the chip system further includes the memory, and the memory stores the computer program or the computer instructions.

Based on the implementations provided in the foregoing aspects, this application may further combine technologies in this application to provide more implementations.

### BRIEF DESCRIPTION OF DRAWINGS

FIG. 1(a) to FIG. 1(d) are diagrams of application scenarios according to an embodiment of this application;
FIG. 2A and FIG. 2B are a diagram of a SparkLink system architecture according to an embodiment of this application;
FIG. 3A and FIG. 3B are a diagram of signaling and data transmission paths according to an embodiment of this application;
FIG. 4 is a schematic flowchart of a transmission method according to an embodiment of this application;
FIG. 5 is another schematic flowchart of a transmission method according to an embodiment of this application;
FIG. 6 is still another schematic flowchart of a transmission method according to an embodiment of this application;
FIG. 7 is yet another schematic flowchart of a transmission method according to an embodiment of this application;
FIG. 8 is still yet another schematic flowchart of a transmission method according to an embodiment of this application;
FIG. 9 is further another schematic flowchart of a transmission method according to an embodiment of this application;
FIG. 10 is further another schematic flowchart of a transmission method according to an embodiment of this application;
FIG. 11 is further another schematic flowchart of a transmission method according to an embodiment of this application;
FIG. 12 is a block diagram of a transmission apparatus according to an embodiment of this application; and
FIG. 13 is another block diagram of a transmission apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, modifiers such as an ordinal number used to distinguish between the described objects do not constitute any limitation on the described objects. For descriptions of the described objects, refer to descriptions of the context in the claims or embodiments. The modifiers should not constitute any unnecessary limitation. In the descriptions of embodiments, unless otherwise specified, "a plurality of" means two or more.

A terminal in embodiments of this application is also referred to as user equipment (user equipment, UE), a mobile station (mobile station, MS), a mobile terminal (mobile terminal, MT), or the like, for example, a handheld device, a vehicle-mounted device, or a vehicle that has a wireless connection function. Examples of some terminals are a mobile phone (mobile phone), a tablet computer, a laptop, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

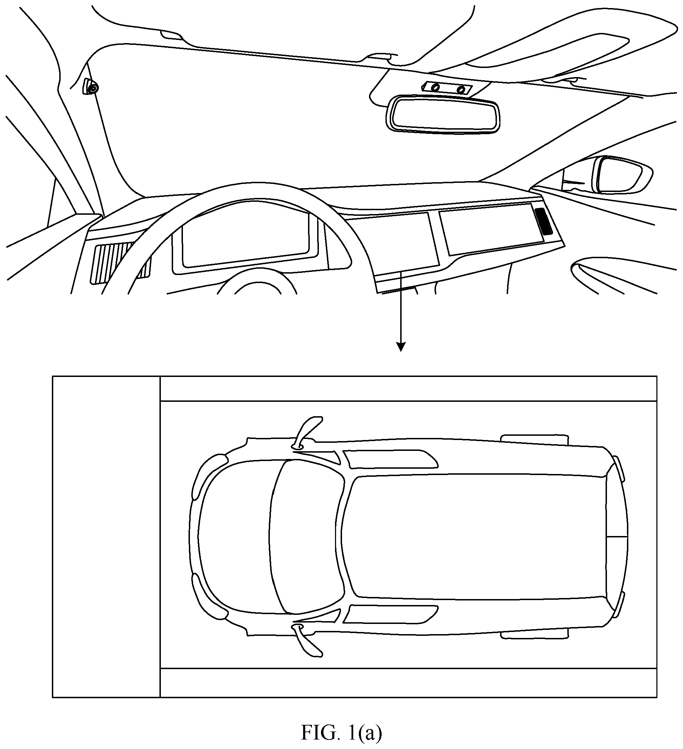

FIG. 1(a) to FIG. 1(d) are diagrams of application scenarios according to an embodiment of this application.

As shown in FIG. 1(a), a vehicle may capture images by using a surround-view camera for splicing, and display a spliced image on a central display screen. In this scenario, the surround-view camera may be used as a source device, and the central display screen may be used as a sink device.

The source device may be understood as a device that sends video data (or image data), and the sink device may be understood as a device that receives and displays the video data (or image data).

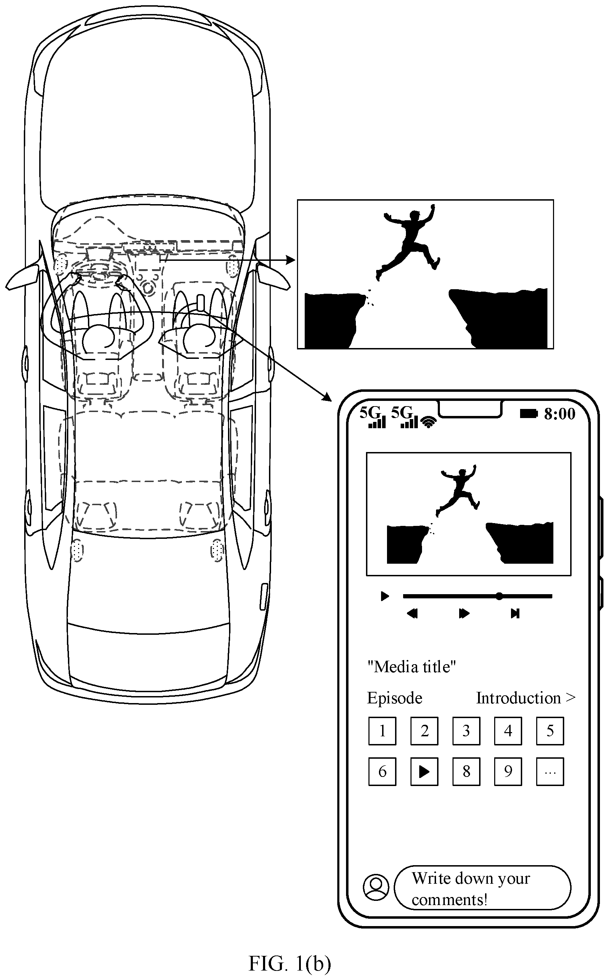

As shown in FIG. 1(b), a mobile phone may project a display interface onto the central display screen of the vehicle. A user can operate the mobile phone reversely by using the central display screen. In this scenario, the mobile phone may be used as a source device, and the central display screen may be used as a sink device.

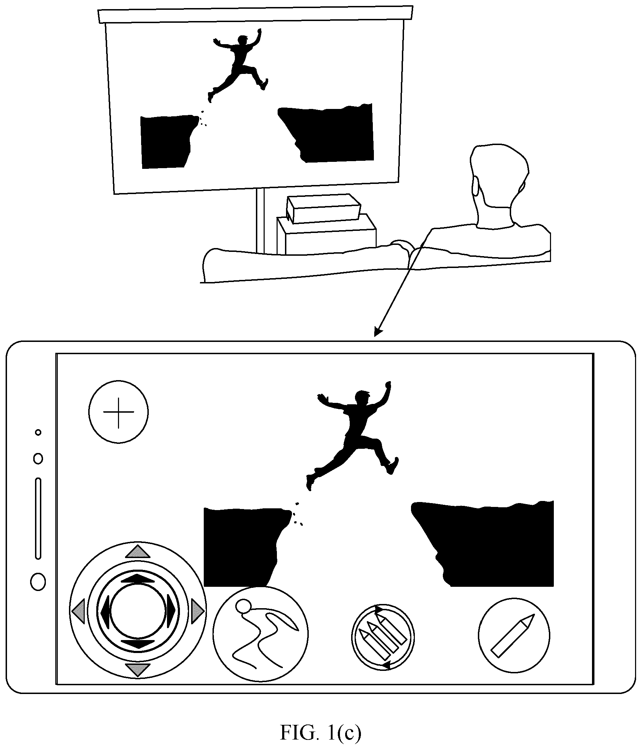

As shown in FIG. 1(c), the mobile phone may project an image of the game application onto a smart screen. The user may use the mobile phone as a remote controller. In this scenario, the mobile phone may be used as a source device, and the smart screen may be used as a sink device.

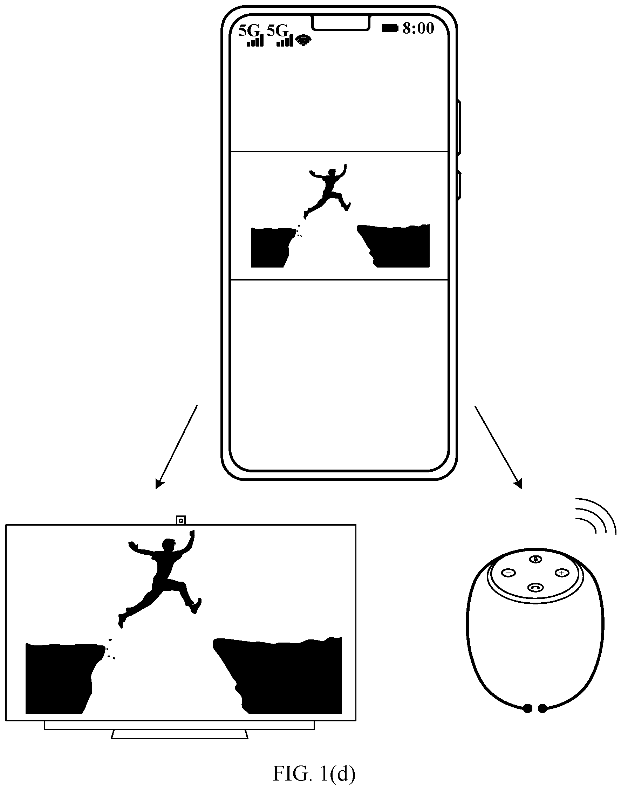

As shown in FIG. 1(d), the mobile phone displays a video playback interface. The mobile phone may send a video stream corresponding to a video to the smart screen for display, and the mobile phone may also send an audio stream corresponding to the video to a sound box for audio playback. In this scenario, the mobile phone may be used as a source device, and the smart screen and the speaker may be used as sink devices. Alternatively, the mobile phone may send a playback link corresponding to the video to the smart screen, so that the smart screen can display an image. In addition, the mobile phone may send the playback link corresponding to the video to the sound box, so that the sound box can play audio. In this scenario, the mobile phone may be used as the source device, and the smart screen and the speaker may be used as the sink devices.

As described above, a Wi-Fi Miracast screen mirroring and projection technology and a DLNA projection technology support only transmission based on an internet protocol (internet protocol, IP) technology stack, and do not support transmission based on another type of technology stack. In this way, for some devices that do not support the IP technology stack, signaling or data cannot be transmitted between the source device and the sink device.

Embodiments of this application provide a transmission method and apparatus, and a terminal, which may be applied to the scenarios in FIG. 1(a) to FIG. 1(e) A video configuration and transmission management sublayer that supports an IP technology stack and a non-IP technology stack is added to the source device or the sink device. Therefore, a transmission channel based on a technology stack can be established between the source device and the sink device, through which signaling and/or data applicable to an application is transmitted. This implements flexible and efficient transmission.

The following describes the technical solutions in embodiments of this application by using a SparkLink system architecture as an example.

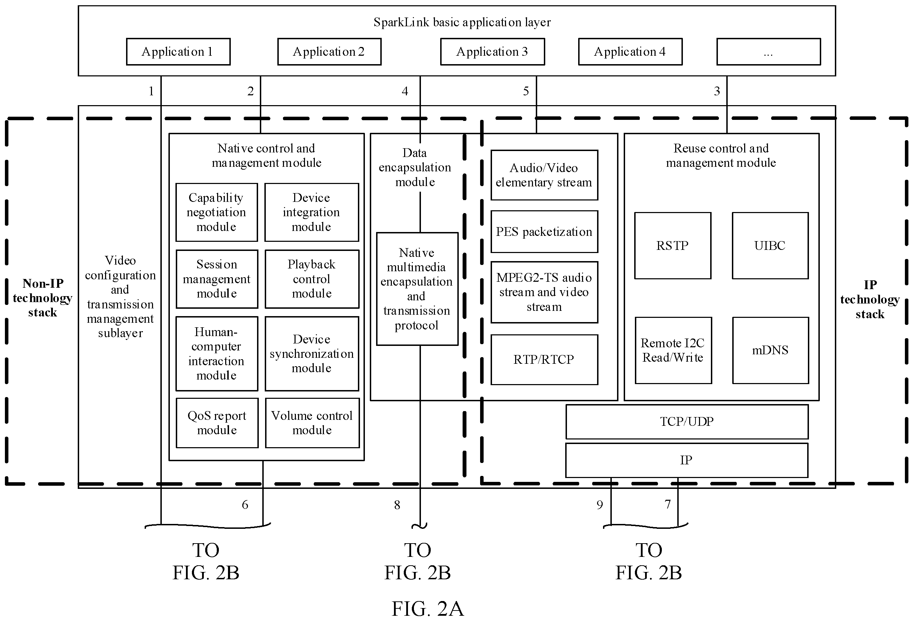

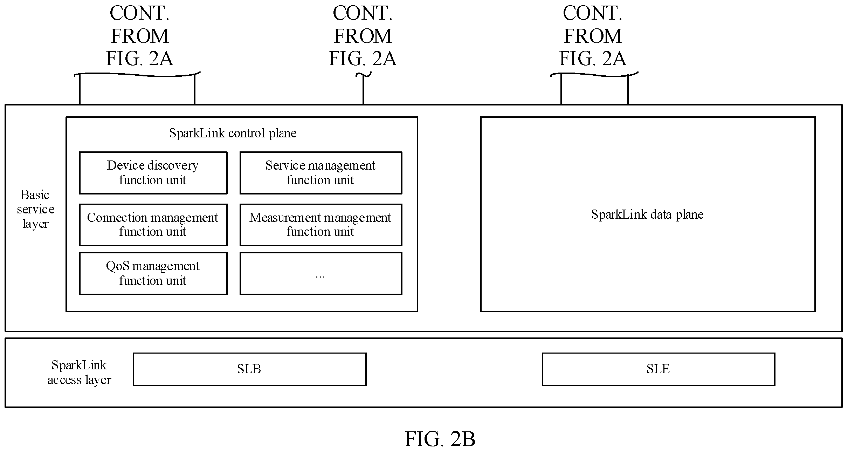

FIG. 2A and FIG. 2B are a diagram of a SparkLink system architecture according to an embodiment of this application. As shown in FIG. 2A and FIG. 2B, the system architecture includes a SparkLink basic application layer, a video configuration and transmission management sublayer, a SparkLink basic service layer, and a SparkLink access layer. The SparkLink basic application layer includes a plurality of applications (for example, a video projection application), and is configured to implement various application functions (for example, a video projection function).

A video configuration and transmission management sublayer is defined between the SparkLink basic application layer and the SparkLink basic service layer. Functional modules at the video configuration and transmission management sublayer include a control and management module and a data encapsulation module. The control and management module may complete inter-device capability negotiation, application session management, and the like. The control and management module can be further divided into a SparkLink native control and management module and a reuse control and management module.

The data encapsulation module may implement audio and video encoding or decoding, packetized elementary stream (packetized elementary stream, PES) packetization, a moving pictures expert group 2-transport stream over real-time transport protocol (moving pictures expert group 2-transport stream over real-time transport protocol, MPEG2-TS over RTP) encapsulation manner, a system-defined video streaming media encapsulation and transmission manner, or the like.

For example, the native control and management module may include one or more of a capability negotiation module, a session management module, a human-computer interaction module, a quality of service (quality of service, QoS) report module, a device integration module, a playback control module, a device synchronization module, a volume control module, and the like.

For example, the capability negotiation module is configured to negotiate a codec type.

The session management module is configured to establish, release, and terminate a session.

The human-computer interaction module is configured to transmit user input to a video application source device or a video application sink device. For example, the user input is a device operation such as a mouse operation, a keyboard operation, or a controller operation, or the user input is a touchscreen operation.

The QoS report module is configured to monitor and report data transmission performance of the video application, where a performance parameter includes a delay, a packet loss, a jitter, and the like.

The device integration module is configured to manage a group including a plurality of associated devices (for example, devices in a same state), to facilitate unified synchronization and service configuration.

The playback control module is configured to implement playback, pause, and stop operations of the video application.

The device synchronization module is configured to synchronize system time between a plurality of devices.

The volume control module is configured to reversely control video and audio playback volume from the video source device or the video sink device.

For another example, the data encapsulation module may include a native multimedia encapsulation and transmission protocol (for example, an audio and video encapsulation format and a streaming media transmission protocol), and may be configured to encapsulate data based on a non-IP technology stack. The data encapsulation module further includes an audio/video elementary stream (elementary stream, ES) protocol, a packet elementary stream packetization (PES packetization) protocol, a moving pictures expert group 2-transport stream (moving pictures expert group 2-transport stream, MPEG2-TS) protocol, and a real-time transport protocol/real-time transport control protocol (real-time transport protocol/real-time transport control protocol, RTP/RTCP). The data encapsulation module can be configured to encapsulate data based on the IP technology stack.

For another example, the reuse control and management module may include one or more of the following: a real-time streaming protocol (real time streaming protocol, RTSP) module, a user input back channel (user input back channel, UIBC) protocol module, a remote I2C read/write (remote I2C read/write) protocol module, and a multicast domain name system (multicast domain name system, mDNS) protocol module.

The SparkLink basic service layer includes a SparkLink control plane and a SparkLink data plane. The SparkLink control plane may include one or more of the following: a device discovery function unit, a service management function unit, a connection management function unit, a measurement management function unit, and a QoS management function unit.

The device discovery function unit is a logical function entity, and is configured to expose existence of the device discovery function unit or discover a peripheral device.

The service management function unit is a logical function entity, and is used for service management and maintenance inside a device and service discovery between devices.

The connection management function unit supports functions such as establishment, update, and deletion of a transmission channel, maintenance of a mapping relationship between a service port and a transport channel identifier (transport channel identifier, TCID), and maintenance of a mapping relationship between a transmission channel and a SparkLink access layer logical channel.

The measurement management function unit supports triggering the SparkLink access layer to measure quality of a physical layer signal, measuring performance of an existing transmission channel in the light, and provides a unified measurement service interface for other function units (such as the QoS management function unit and a 5th generation mobile communication technology (5th generation mobile communication technology, 5G) convergence function unit) or an authorized application inside the SparkLink device. A corresponding function unit is allowed to provide configuration information about expected measurement to the measurement management function unit and query a measurement result.

The QoS management function unit is a logical function entity. The QoS management function unit can determine a service quality that needs to be provided by a SparkLink wireless communication system based on factors such as service transmission requirements and network conditions, to ensure that a transmission capability of the SparkLink wireless communication system matches the service requirements.

The SparkLink data plane may be used for one or more of data transmission mode selection, data fragmentation or aggregation, and data transmission air interface selection.

The SparkLink access layer includes an SLB air interface and an SLE air interface.

FIG. 2A and FIG. 2B further show an example of a protocol layer structure, and specifically shows an interface 1 to an interface 5 and a transmission channel 6 to a transmission channel 9. The interface 1 is a device discovery and service discovery message interface. The interface 2 and the interface 3 are video application session management signaling and primitive interfaces (configured to select a control and management module and a data encapsulation module that correspond to the IP technology stack or the non-IP technology stack). The interface 4 and the interface 5 are audio data and video data transmission interfaces (configured to select native multimedia encapsulation or MPEG2-TS standard audio and video encapsulation). The transmission channel 6 is a native control and management signaling transmission channel based on the non-IP technology stack. The transmission channel 7 is a control and management protocol signaling transmission channel based on the IP technology stack. The transmission channel 8 is a data transmission channel based on the non-IP technology stack. The transmission channel 9 is a data transmission channel based on the IP technology stack.

Embodiments of this application further provide an end-to-end working procedure of a wireless short-range video projection application. The working procedure includes the following phases.

### (1) Initial phase

A plurality of video applications have a unique application indication identifier (for example, an application identifier (application identifier, AID) or a universally unique identifier (universally unique identifier, UUID)) and a dynamically allocated port number (port) that are included in the data frame in the SparkLink system in a static allocation or dynamic registration manner, to identify corresponding application data. Based on an allocated or registered application identifier and a port number range, it may be determined that a corresponding video application type is an IP application or a non-IP application, so that a system subsequently invokes different technology stacks.

### (2) Device and service discovery phase

### (3) Phase of establishing an SLB streaming media general management transmission channel and a multimedia data transmission channel

For specific descriptions of the device and service discovery phase and the phase of establishing the SLB streaming media general management transmission channel and the multimedia data transmission channel, refer to descriptions in the following transmission method.

### (4) Device capability negotiation phase

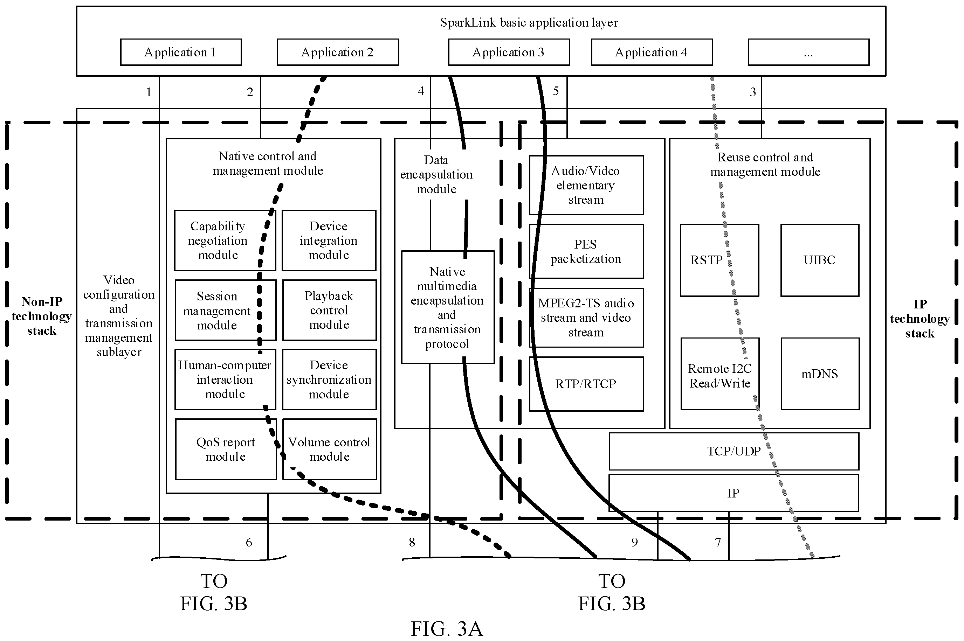

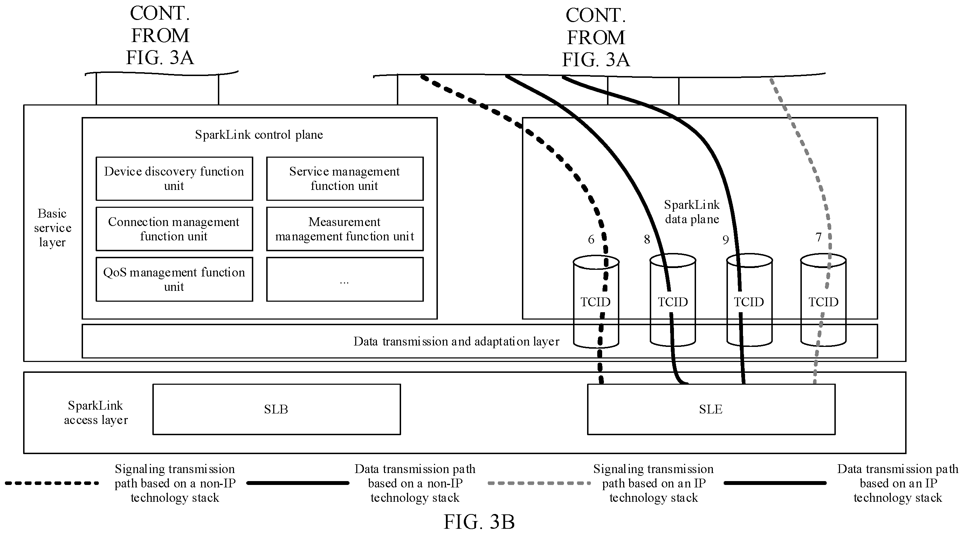

FIG. 3A and FIG. 3B are a diagram of signaling and data transmission paths according to an embodiment of this application. Capability negotiation between a source device and a sink device can be implemented through an SLB streaming media general management channel based on the non-IP technology stack or an SLB streaming media general management channel based on the IP technology stack.

### (5) Video application session establishment phase

As shown in FIG. 3A and FIG. 3B, a video application session may be established through an SLB streaming media general management channel based on the non-IP technology stack or an SLB streaming media general management channel based on the IP technology stack.

### (6) Video stream encapsulation and transmission phase

As shown in FIG. 3A and FIG. 3B, video stream encapsulation and transmission can be implemented through an SLB streaming media general management channel based on the non-IP technology stack or an SLB streaming media general management channel based on the IP technology stack.

### (7) Real-time audio and video stream performance reporting phase

As shown in FIG. 3A and FIG. 3B, the SparkLink basic service layer can serve a non-IP video application and an IP video application. The native control and management module can request, respond to, subscribe to, or publish monitoring a result through the SLB streaming media general management channel based on the non-IP technology stack. Alternatively, the reuse control and management module may request, respond to, subscribe to, or publish a monitoring result through the SLB streaming media general management channel based on the IP technology stack.

### (8) Video application session keep-alive mechanism and application session release termination phase

As shown in FIG. 3A and FIG. 3B, video application session keep-alive or release can be implemented through the SLB streaming media general management channel based on the non-IP technology stack or an SLB streaming media general management channel based on the IP technology stack.

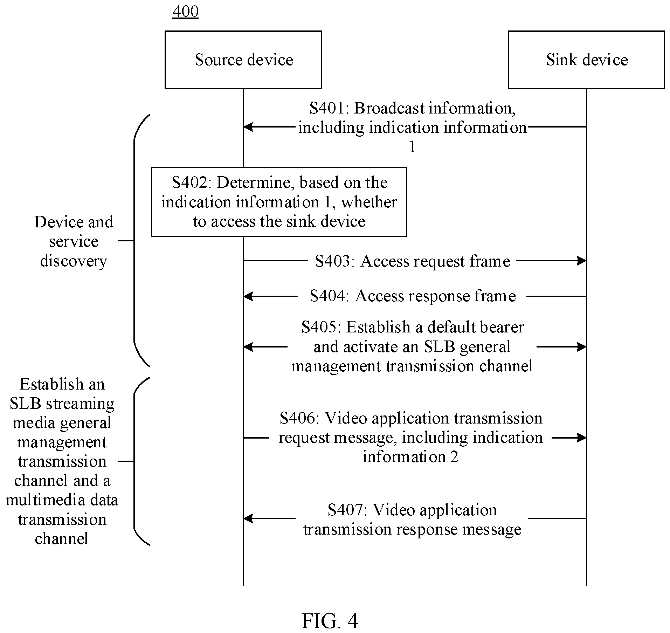

The following describes a transmission method provided in an embodiment of this application with reference to FIG. 4 to FIG. 13. The transmission method may be used to implement the foregoing device and service discovery phase and the phase of establishing the SLB streaming media general management transmission channel and the multimedia data transmission channel. It should be noted that, for ease of describing the solution, the following uses the source device and the sink device as an example for description. However, this application is not limited to being applied only to the "source device" and the "sink device." It may be understood that the solutions of this application may be applied to any two nodes that perform communication transmission, for example, a first device and a second device, or a grant node (G node) and a terminal node (T node).

FIG. 4 is a schematic flowchart of a transmission method 400 according to an embodiment of this application. The method may be implemented by a source device and a sink device. As shown in FIG. 4, the method 400 includes the following steps.

S401: The sink device sends broadcast information, where the broadcast information includes indication information 1, and the indication information 1 indicates a first technology stack type corresponding to a first application.

Correspondingly, the source device receives the broadcast information.

That the indication information 1 indicates the first technology stack type corresponding to the first application may also be understood as that the first indication information indicates the first technology stack type corresponding to the first application in the sink device. For example, if the sink device includes an application 1, and a technology stack type corresponding to the application 1 in the sink device is an IP technology stack, the sink device may include, in the broadcast information, indication information of the IP technology stack corresponding to the application 1.

Optionally, the broadcast information is an SLB system message or an SLE broadcast message.

Optionally, the broadcast information includes a device identifier of the sink device.

Optionally, the indication information 1 may include an identifier of the first application (for example, an AID or a UUID of the first application) and information about the first technology stack type.

For example, the indication information 1 may include a first field and a second field. Optionally, the first field is used to carry identification information of the first application, and the second field is used to carry the information about the first technology stack type. When a value of a bit carried in the second field is 0, it indicates that the technology stack type corresponding to the first application in the sink device is a non-IP technology stack. Alternatively, when a value of a bit carried in the second field is 1, it indicates that the technology stack type corresponding to the first application in the sink device is an IP technology stack.

For example, the indication information 1 may include the first field and the second field, and the first field is used to carry the identification information of the first application. When the second field does not carry any information, it indicates that the technology stack type corresponding to the first application in the sink device is the non-IP technology stack. When the second field carries specific information, it indicates that the technology stack type corresponding to the first application in the sink device is the IP technology stack.

Optionally, the indication information 1 may further include information that indicates a technology stack type corresponding to the second application.

For example, the indication information 1 may include a third field and a fourth field. Optionally, the third field is used to carry identification information of the second application, and the fourth field is used to carry information about the technology stack type corresponding to the second application. When a value of a bit carried in the second field is 0, it indicates that the technology stack type corresponding to the second application in the sink device is a non-IP technology stack. Alternatively, when a value of a bit carried in the second field is 1, it indicates that the technology stack type corresponding to the second application in the sink device is the IP technology stack.

It should be understood that the indication information 1 may further include identifiers of three or more applications and information about a technology stack type corresponding to each application.

S402: The source device determines, based on the indication information 1, whether to access the sink device.

Optionally, when determining that the second technology stack type corresponding to the first application in the source device matches the first technology stack type carried in the indication information 1, the source device may access the sink device.

Optionally, that the second technology stack type corresponding to the first application in the source device matches the first technology stack type carried in the indication information 1 includes: The second technology stack type is the same as the first technology stack type; or the second technology stack type and the first technology stack type are technology stacks of a same type. For example, the non-IP technology stack may include a non-IP technology stack A and a non-IP technology stack B. If the second technology stack type is the non-IP technology stack A and the first technology stack type is the non-IP technology stack B, it may be considered that the second technology stack type and the first technology stack type are technology stacks of a same type.

Optionally, the source device may further determine, with reference to another filter condition, whether to access the sink device. For example, the filter condition includes but is not limited to a media access control identifier (medium access control identifier, MAC ID) and a device name of the sink device, or other device information disclosed by the sink device.

S403: The source device sends an access request frame to the sink device, where the access request frame is used to request to access the sink device.

Correspondingly, the sink device receives the access request frame sent by the source device.

S404: The sink device sends an access response frame to the source device, where the access response frame is used to indicate that the source device is allowed to access the sink device.

Correspondingly, the source device receives the access response frame sent by the sink device.

S405: The source device and the sink device may establish a default bearer and activate an SLB general management transmission channel.

It should be understood that the device and service discovery phase may include S401 to S405.

S406: The source device sends a video application transmission request message to the sink device, where the video application transmission request message includes indication information 2, and the indication information 2 indicates a second technology stack type of the first application.

Correspondingly, the sink device receives the video application transmission request message sent by the source device.

Optionally, the video application transmission request message may further include information such as a source port number (srcPort), a destination port number (dstPort), and a QoS parameter.

For example, the indication information 2 may include a fifth field and a sixth field. Optionally, the fifth field is used to carry the identification information of the first application, and the sixth field is used to carry information about the second technology stack type. When a value of a bit carried in the sixth field is 0, it indicates that the technology stack type corresponding to the first application in the source device is the non-IP technology stack. Alternatively, when a value of a bit carried in the sixth field is 1, it indicates that the technology stack type corresponding to the first application in the source device is the IP technology stack.

For example, the indication information 2 may include the fifth field and the sixth field. Optionally, the fifth field is used to carry the identification information of the first application. When the sixth field does not carry any information, it indicates that the technology stack type corresponding to the first application in the source device is the non-IP technology stack. Alternatively, when the sixth field carries specific information, it indicates that the technology stack type corresponding to the first application in the source device is the IP technology stack.

S407: The sink device sends a video application transmission response message to the source device.

Correspondingly, the source device receives the video application transmission response message sent by the sink device.

Optionally, the video application transmission response message includes a target device layer-2 identifier (TargetLayer2ID), a media access layer identifier, a source port number, a destination port number, a source transmission channel identifier (srcTCID), a destination transmission channel identifier (dstTCID), and the information about the first technology stack type.

It should be understood that the foregoing phase of establishing the SLB streaming media general management transmission channel and the multimedia data transmission channel may include S406 and S407.

The source device and the sink device may exchange non-default transmission channel establishment signaling through the SLB general management transmission channel based on the information about the first technology stack type received by the source device in the device and service discovery phase, to establish the SLB streaming media general management channel, used by a native control and management module to establish a signaling transmission channel based on the non-IP technology stack, or used by a reuse control and management module to establish a signaling transmission channel based on the IP technology stack. In addition, an SLB multimedia data transmission channel is established to transmit a non-IP data frame based on a native media encapsulation format or an IP data frame based on an MPEG2-TS encapsulation format.

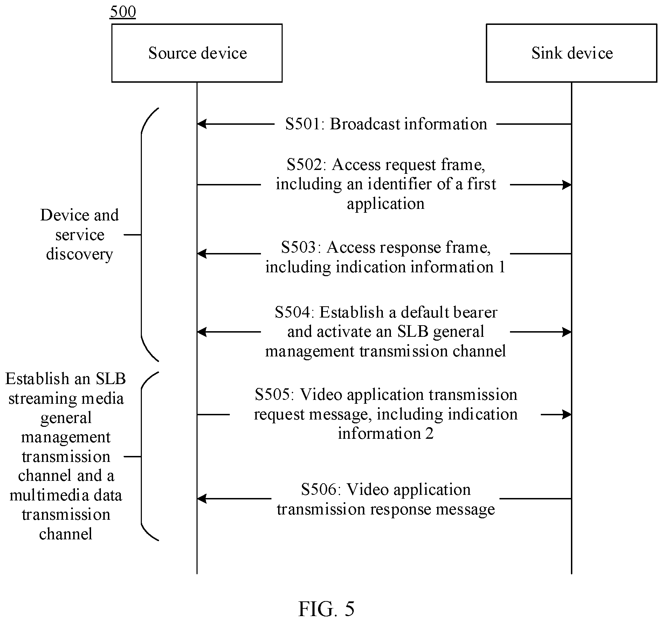

FIG. 5 is a schematic flowchart of a transmission method 500 according to an embodiment of this application. The method may be implemented by a source device and a sink device. As shown in FIG. 5, the method 500 includes the following steps.

S501: The sink device sends broadcast information.

Correspondingly, the source device receives the broadcast information.

Optionally, the broadcast information is an SLB system message or an SLE broadcast message.

Optionally, the broadcast information includes a device identifier of the sink device.

S502: The source device sends an access request frame to the sink device, where the access request frame includes identification information of a first application.

Correspondingly, the sink device receives the access request frame sent by the source device.

Optionally, before the source device sends the access request frame to the sink device, the method further includes: The source device determines, based on a filter condition, to access the sink device.

It should be understood that, for descriptions of the filter condition, refer to the descriptions in the foregoing method 400. Details are not described herein again.

S503: The sink device sends an access response frame to the source device, where the access response frame includes indication information 1, and the indication information 1 indicates information about a first technology stack type corresponding to the first application.

Correspondingly, the source device receives the access response frame sent by the sink device.

It should be understood that, for the indication information 1, refer to the descriptions in the method 400. Details are not described herein again.

S504: The source device and the sink device may establish a default bearer and activate an SLB general management transmission channel.

It should be understood that the device and service discovery phase may include S501 to S504.

S505: The source device sends a video application transmission request message to the sink device, where the video application transmission request message includes indication information 2, and the indication information 2 indicates a second technology stack type of the first application.

Correspondingly, the sink device receives the video application transmission request message sent by the source device.

It should be understood that, for the indication information 2, refer to the descriptions in the method 400. Details are not described herein again.

S506: The sink device sends a video application transmission response message to the source device.

Correspondingly, the source device receives the video application transmission response message sent by the sink device.

It should be understood that the foregoing phase of establishing the SLB streaming media general management transmission channel and the multimedia data transmission channel may include S505 and S506.

It should be further understood that, for descriptions of S505 and S506, refer to the descriptions of S406 and S407 in the method 400. Details are not described herein again.

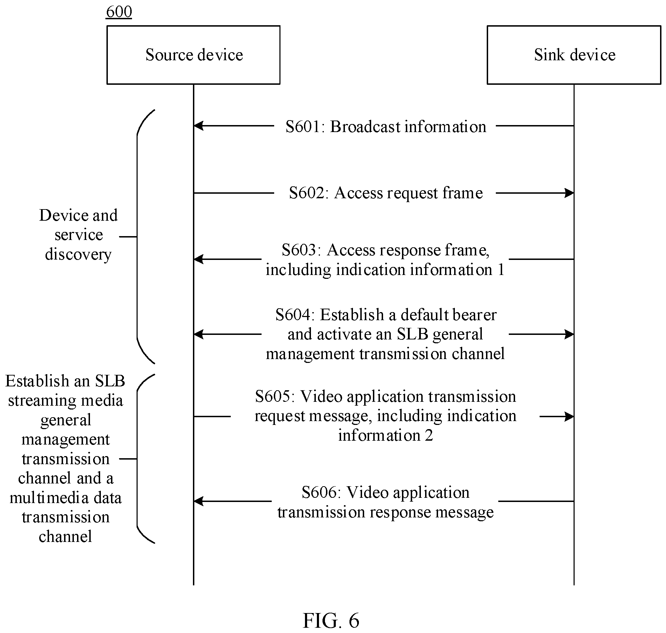

FIG. 6 is a schematic flowchart of a transmission method 600 according to an embodiment of this application. Different from the method 500, an access request frame in S602 may not carry an identifier of a first application. As shown in FIG. 6, the method 600 includes the following steps.

S601: The sink device sends broadcast information.

Correspondingly, the source device receives the broadcast information.

Optionally, the broadcast information is an SLB system message or an SLE broadcast message.

Optionally, the broadcast information includes a device identifier of the sink device.

S602: The source device sends an access request frame to the sink device.

Correspondingly, the sink device receives the access request frame sent by the source device.

Optionally, before the source device sends the access request frame to the sink device, the method further includes: The source device determines, based on a filter condition, to access the sink device.

It should be understood that, for descriptions of the filter condition, refer to the descriptions in the foregoing method 400. Details are not described herein again.

S603: The sink device sends an access response frame to the source device, where the access response frame includes indication information 1, and the indication information 1 indicates information about a first technology stack type corresponding to the first application.

Correspondingly, the source device receives the access response frame sent by the sink device.

It should be understood that, for the indication information 1, refer to the descriptions in the method 400. Details are not described herein again.

Optionally, the indication information 1 may further include information that indicates a technology stack type corresponding to the second application.

For example, the indication information 1 may include a third field and a fourth field. The third field is used to carry identification information of the second application, and the fourth field is used to carry information about the technology stack type corresponding to the second application. When a value of a bit carried in the second field is 0, it indicates that the technology stack type corresponding to the second application in the sink device is a non-IP technology stack. When a value of a bit carried in the second field is 1, it indicates that the technology stack type corresponding to the second application in the sink device is the IP technology stack.

It should be understood that the indication information 1 may further include identifiers of three or more applications and information about a technology stack type corresponding to each application.

S604: The source device and the sink device may establish a default bearer and activate an SLB general management transmission channel.

It should be understood that the device and service discovery phase may include S601 to S604.

S605: The source device sends a video application transmission request message to the sink device, where the video application transmission request message includes indication information 2, and the indication information 2 indicates a second technology stack type of the first application.

Correspondingly, the sink device receives the video application transmission request message sent by the source device.

It should be understood that, for the indication information 2, refer to the descriptions in the method 400. Details are not described herein again.

S606: The sink device sends a video application transmission response message to the source device.

Correspondingly, the source device receives the video application transmission response message sent by the sink device.

It should be understood that the foregoing phase of establishing the SLB streaming media general management transmission channel and the multimedia data transmission channel may include S605 and S606.

It should be further understood that, for descriptions of S605 and S606, refer to the descriptions of S406 and S407 in the method 400. Details are not described herein again.

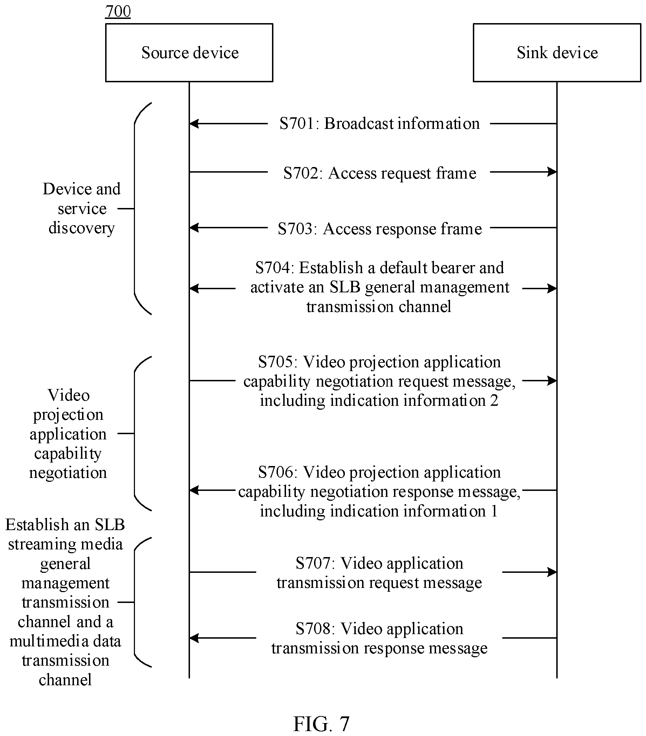

The foregoing describes, with reference to FIG. 4 to FIG. 6, a process in which the sink device sends the indication information 1 to the source device in the device and service discovery phase. The following describes, with reference to FIG. 7 to FIG. 10, a process in which the sink device sends the indication information 1 to the source device in a video projection application capability negotiation phase.

FIG. 7 is a schematic flowchart of a transmission method 700 according to an embodiment of this application. The method may be implemented by a source device and a sink device. As shown in FIG. 7, the method 700 includes the following steps.

S701: The sink device sends broadcast information.

Correspondingly, the source device receives the broadcast information.

Optionally, the broadcast information is an SLB system message or an SLE broadcast message.

Optionally, the broadcast information includes a device identifier of the sink device.

S702: The source device sends an access request frame to the sink device.

Correspondingly, the sink device receives the access request frame sent by the source device.

Optionally, before the source device sends the access request frame to the sink device, the method further includes: The source device determines, based on a filter condition, to access the sink device.

It should be understood that, for descriptions of the filter condition, refer to the descriptions in the foregoing method 400. Details are not described herein again.

S703: The sink device sends an access response frame to the source device.

Correspondingly, the source device receives the access response frame sent by the sink device.

S704: The source device and the sink device may establish a default bearer and activate an SLB general management transmission channel.

It should be understood that the device and service discovery phase may include S701 to S704.

S705: The source device sends a video projection application capability negotiation request message to the sink device, where the video projection application capability negotiation request message includes indication information 2, and the indication information 2 indicates a second technology stack type of the first application.

Correspondingly, the sink device receives the video projection application capability negotiation request message sent by the source device.

Optionally, the indication information 2 may include an identifier of the first application and information about the second technology stack type.

It should be understood that, for the indication information 2, refer to the descriptions in the method 400. Details are not described herein again.

Optionally, the video projection application capability negotiation request message further includes other capability information of the source device, for example, an audio/video encoding type or an audio/video decoding type of the source device, or a protocol stack type supported by the source device.

S706: The sink device sends a video projection application capability negotiation response message to the source device, where the video projection application capability negotiation response message includes indication information 1, and the indication information 1 indicates a first technology stack type of the first application.

Correspondingly, the source device receives the video projection application capability negotiation response message sent by the sink device.

Optionally, the indication information 1 may include an identifier of the first application and information about the first technology stack type.

It should be understood that, for the indication information 1, refer to the descriptions in the method 400. Details are not described herein again.

Optionally, the video projection application capability negotiation response message may include other capability information of the sink device, for example, an audio/video encoding type or an audio/video decoding type of the sink device, or a protocol stack type supported by the sink device.

It should be understood that the foregoing end-to-end working procedure of a wireless short-range video projection application may further include a video projection application capability negotiation phase. The video projection application capability negotiation phase may include S705 and S706.

S707: The source device sends a video application transmission request message to the sink device.

Correspondingly, the sink device receives the video application transmission request message sent by the source device.

Optionally, the video application transmission request message may further include information such as a source port number, a destination port number, and a QoS parameter.

S708: The sink device sends a video application transmission response message to the source device.

Correspondingly, the source device receives the video application transmission response message sent by the sink device.

Optionally, the video application transmission response message includes TargetLayer2ID, a source port number, a destination port number, a source transmission channel identifier, a destination transmission channel identifier, and the information about the first technology stack type.

It should be understood that the foregoing phase of establishing the SLB streaming media general management transmission channel and the multimedia data transmission channel may include S707 and S708.

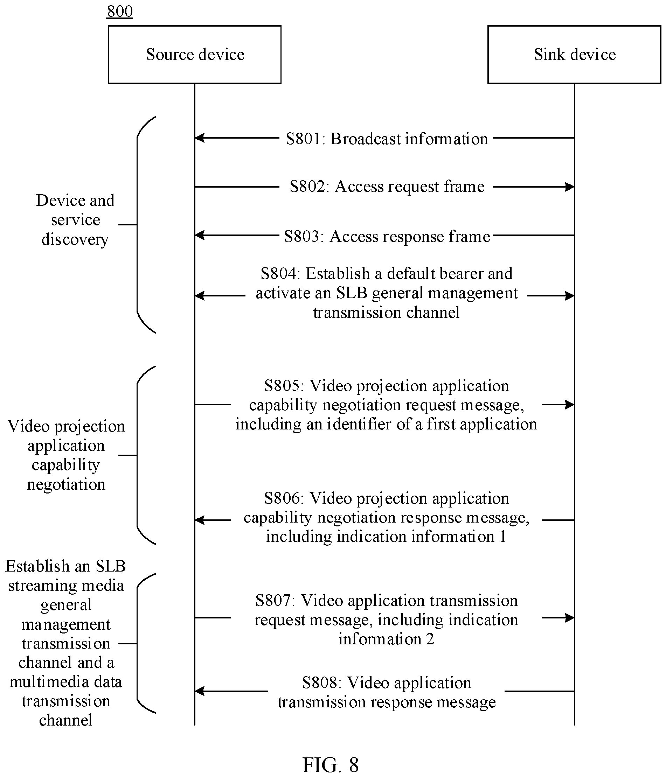

FIG. 8 is a schematic flowchart of a transmission method 800 according to an embodiment of this application. The method may be implemented by a source device and a sink device. As shown in FIG. 8, the method 800 includes the following steps.

S801: The sink device sends broadcast information.

S802: The source device sends an access request frame to the sink device.

S803: The sink device sends an access response frame to the source device.

S804: The source device and the sink device may establish a default bearer and activate an SLB general management transmission channel.

It should be understood that the device and service discovery phase may include S801 to S804. For descriptions of S801 to S804, refer to the foregoing descriptions of S701 to S704. Details are not described herein again.

S805: The source device sends a video projection application capability negotiation request message to the sink device, where the video projection application capability negotiation request message includes an identifier of a first application.

Correspondingly, the sink device receives the video projection application capability negotiation request message sent by the source device.

S806: The sink device sends a video projection application capability negotiation response message to the source device, where the video projection application capability negotiation response message includes indication information 1, and the indication information 1 indicates the first technology stack type of the first application.

Correspondingly, the source device receives the video projection application capability negotiation response message sent by the sink device.

Optionally, the indication information 1 may include an identifier of the first application and information about the first technology stack type.

It should be understood that the video projection application capability negotiation phase may include S805 and S806.

It should be further understood that, for the indication information 1, refer to the descriptions in the method 400. Details are not described herein again.

S807: The source device sends a video application transmission request message to the sink device, where the video application transmission request message includes indication information 2, and the indication information 2 indicates a second technology stack type of the first application.

Correspondingly, the sink device receives the video application transmission request message sent by the source device.

It should be understood that, for the indication information 2, refer to the descriptions in the method 400. Details are not described herein again.

S808: The sink device sends a video application transmission response message to the source device.

Correspondingly, the source device receives the video application transmission response message sent by the sink device.

It should be understood that, for S807 and S808, refer to the descriptions of S406 and S407. Details are not described herein again.

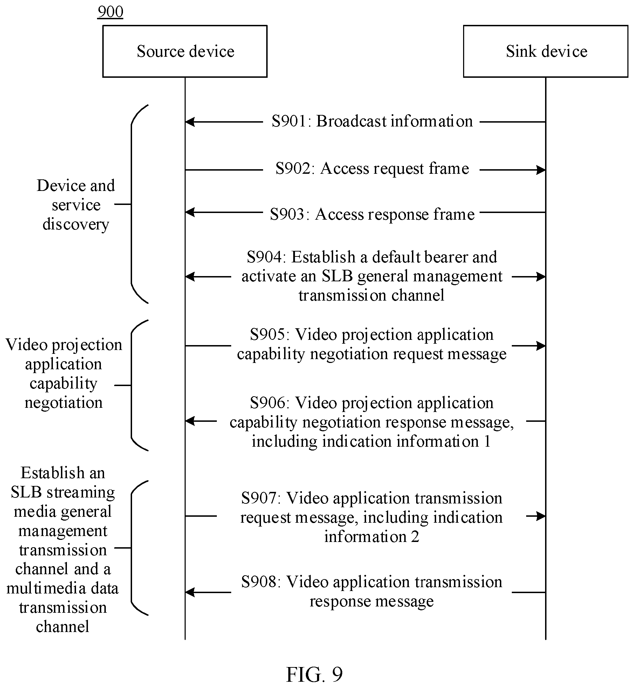

FIG. 9 is a schematic flowchart of a transmission method 900 according to an embodiment of this application. The method may be implemented by a source device and a sink device. As shown in FIG. 9, the method 900 includes the following steps.

S901: The sink device sends broadcast information.

S902: The source device sends an access request frame to the sink device.

S903: The sink device sends an access response frame to the source device.

S904: The source device and the sink device may establish a default bearer and activate an SLB general management transmission channel.

It should be understood that the device and service discovery phase may include S901 to S904. For descriptions of S901 to S904, refer to the foregoing descriptions of S701 to S704. Details are not described herein again.

S905: The source device sends a video projection application capability negotiation request message to the sink device.

Correspondingly, the sink device receives the video projection application capability negotiation request message sent by the source device.

Optionally, the video projection application capability negotiation request message further includes other capability information of the source device, for example, an audio/video encoding type or an audio/video decoding type of the source device, or a protocol stack type supported by the source device.

S906: The sink device sends a video projection application capability negotiation response message to the source device, where the video projection application capability negotiation response message includes indication information 1, and the indication information 1 indicates a first technology stack type of the first application.

Correspondingly, the source device receives the video projection application capability negotiation response message sent by the sink device.

Optionally, the indication information 1 may include an identifier of the first application and information about the first technology stack type.

It should be understood that, for the indication information 1, refer to the descriptions in the method 400. Details are not described herein again.

Optionally, the video projection application capability negotiation response message may include other capability information of the sink device, for example, an audio/video encoding type or an audio/video decoding type of the sink device, or a protocol stack type supported by the sink device.

Optionally, the indication information 1 may further include information that indicates a technology stack type of the second application.

It should be understood that the video projection application capability negotiation phase may include S905 and S906.

S907: The source device sends a video application transmission request message to the sink device, where the video application transmission request message includes indication information 2, and the indication information 2 indicates a second technology stack type of the first application.

Correspondingly, the sink device receives the video application transmission request message sent by the source device.

It should be understood that, for the indication information 2, refer to the descriptions in the method 400. Details are not described herein again.

S908: The sink device sends a video application transmission response message to the source device.

Correspondingly, the source device receives the video application transmission response message sent by the sink device.

It should be understood that, for S907 and S908, refer to the descriptions of S406 and S407. Details are not described herein again.

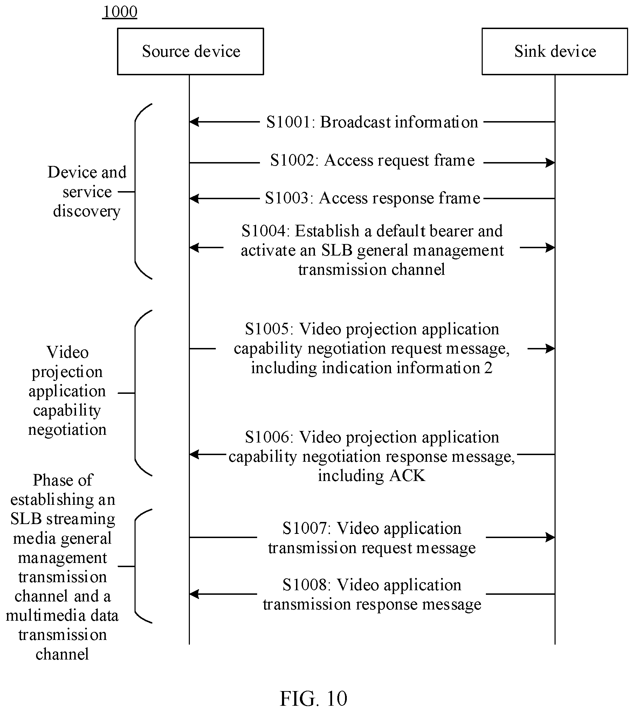

FIG. 10 is a schematic flowchart of a transmission method 1000 according to an embodiment of this application. The method may be implemented by a source device and a sink device. As shown in FIG. 10, the method 1000 includes the following steps.

S1001: The sink device sends broadcast information.

S1002: The source device sends an access request frame to the sink device.

S1003: The sink device sends an access response frame to the source device.

S1004: The source device and the sink device may establish a default bearer and activate an SLB general management transmission channel.

It should be understood that the device and service discovery phase may include S1001 to S1004. For descriptions of S1001 to S1004, refer to the foregoing descriptions of S701 to S704. Details are not described herein again.

S1005: The source device sends a video projection application capability negotiation request message to the sink device, where the video projection application capability negotiation request message includes indication information 2, and the indication information 2 indicates a second technology stack type of the first application.

Correspondingly, the sink device receives the video projection application capability negotiation request message sent by the source device.

It should be understood that for descriptions of S1005, refer to the descriptions of S705. Details are not described herein again.

S1006: The sink device sends a video projection application capability negotiation response message to the source device, where the video projection application capability negotiation response message includes acknowledgment (ACK) information.

Correspondingly, the source device receives the video projection application capability negotiation response message sent by the sink device.

The ACK carried in the video projection application capability negotiation response message may implicitly indicate that the first technology stack type corresponding to the first application in the sink device matches the second technology stack type carried in the indication information 2.

For example, the video projection application capability negotiation response message includes one field. If a bit value carried in the field is 1, it indicates that the first technology stack type corresponding to the first application in the sink device matches the second technology stack type indicated in the indication information 2. If the bit value carried in the field is 0, it indicates that the first technology stack type corresponding to the first application in the sink device does not match the second technology stack type indicated in the indication information 2.

S1007: The source device sends a video application transmission request message to the sink device.

S1008: The sink device sends a video application transmission response message to the source device.

It should be understood that, for S1007 and S1008, refer to the foregoing descriptions of S707 and S708. Details are not described herein again.

It should be further understood that the foregoing phase of establishing the SLB streaming media general management transmission channel and the multimedia data transmission channel may include S1007 and S1008.

It should be further understood that the foregoing method 400 to method 1000 are described by using an example in which the sink device sends the broadcast message, so that the source device discovers the sink device by using the broadcast message and then accesses the sink device. Embodiments of this application are not limited thereto. For example, the source device may send the broadcast message, so that the sink device discovers the source device by using the broadcast message and then accesses the source device.

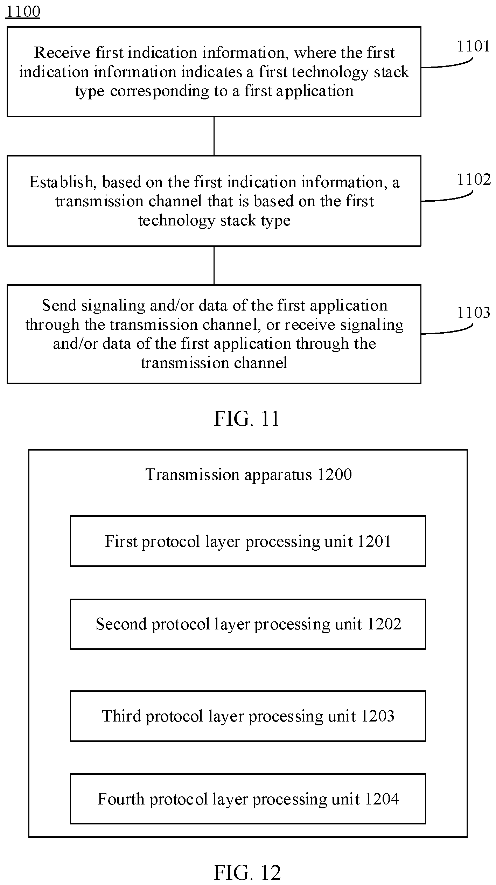

FIG. 11 is a schematic flowchart of a transmission method 1100 according to an embodiment of this application. The method 1100 includes the following steps.

S1101: Receive first indication information, where the first indication information indicates a first technology stack type corresponding to a first application.

Optionally, the first technology stack type is a technology stack type that is of the first application and that is supported by the device that sends the first indication information.

Optionally, the first application is a video application or an audio application.

Optionally, the receiving first indication information includes: The second device receives the first indication information sent by the first device.

For example, the first device may be the sink device, and the second device may be the source device.

Optionally, that the second device receives the first indication information sent by the first device includes: The second device receives the broadcast information sent by the first device, where the broadcast information includes the first indication information, and the second device sends first request information to the first device, where the first request information is used to request to access the device 1.

For example, the broadcast information may be the broadcast information in S401 in FIG. 4, and the first indication information may be the indication information 1 in the broadcast information.

Optionally, the broadcast information includes an SLB system message or an SLE broadcast message.

Optionally, before the establishing a transmission channel that is based on the first technology stack type, the method further includes: The second device determines that the first technology stack type matches a second protocol stack type corresponding to the first application in a second device.

For example, as shown in S402 in FIG. 4, after receiving the broadcast information sent by the sink device, the source device may determine whether the second protocol stack type corresponding to the first application in the source device matches the first protocol stack type indicated in the first indication information. If the second protocol stack type corresponding to the first application in the source device matches the first protocol stack type indicated in the first indication information, the source device may send an access request frame to the sink device. If the second protocol stack type corresponding to the first application in the source device does not match the first protocol stack type indicated in the first indication information, the source device does not send the access request frame to the sink device.

Optionally, before the second device receives the first indication information from the first device, the method further includes: The second device sends first request information to the first device, where the first request information is used to request to access the first device. That the second device receives the first indication information from a first device includes: The second device receives first response information for the first request information from the first device, where the first response information includes the first indication information.

Optionally, the first request information is carried in an access request frame, and the first response information is carried in an access response frame.

For example, the first request information may be carried in the access response frame shown in FIG. 5 or FIG. 6, and the first indication information may be the indication information 1 in the access response frame.

Optionally, the first request information includes identification information of the first application.

For example, the first request information may be carried in the access request frame shown in FIG. 5, and the access request frame may further include an identifier of the first application. In this way, after receiving the access request frame, the sink device may learn that the source device expects to request the information about the technology stack type corresponding to the first application in the sink device. Therefore, the sink device may include the first indication information in the access response frame sent to the source device.

Optionally, before the second device receives the first indication information from the first device, the method further includes: The second device sends second request information to the first device, where the second request information is used to request to perform capability negotiation with the first device. That the second device receives the first indication information from a first device includes: The second device receives second response information for the second request information from the first device, where the second response information includes the first indication information.

Optionally, the second request information is carried in a video projection application capability negotiation request message, and the second response information is carried in a video projection application capability negotiation response message.

For example, the first indication information may be carried in the video projection application capability negotiation response message shown in FIG. 7 to FIG. 10, and the first indication information may be the indication information 1 in the video projection application capability negotiation response message.

Optionally, the second request information includes identification information of the first application.

For example, the video projection application capability negotiation request message shown in FIG. 7, FIG. 8, and FIG. 10 may carry an identifier of the first application. In this way, after receiving the video projection application capability negotiation request message, the sink device may learn that the source device expects to request the information about the technology stack type corresponding to the first application in the sink device. Therefore, the sink device may include the first indication information in the video projection application capability negotiation response message sent to the source device.

Optionally, the second request information includes second indication information, and the second indication information indicates a second technology stack type corresponding to the first application.

For example, the video projection application capability negotiation request message shown in FIG. 7 may carry the second indication information, and the second indication information may be the indication information 2 in the video projection application capability negotiation request message.

Optionally, the receiving first indication information includes: The first device receives the first indication information sent by the second device. For example, the first device may be the sink device, and the second device may be the source device.

Optionally, before the first device receives the first indication information sent by the second device, the method further includes: The first device sends broadcast information, where the broadcast information includes second indication information, and the second indication information indicates a second technology stack type corresponding to the first application.

Optionally, the broadcast information includes an SLB system message or an SLE broadcast message.

For example, the broadcast information may be the broadcast information in S401 in FIG. 4, and the second indication information may be the indication information 1 in the broadcast information.

Optionally, before the first device receives the first indication information sent by the second device, the method further includes: The first device receives first request information sent by the second device, where the first request information is used to request to access a first device; and the first device sends first response information for the first request information to the second device, where the first response information includes second indication information, and the second indication information indicates a second technology stack type corresponding to the first application.

For example, the second indication information may be carried in the access response frame shown in FIG. 5 or FIG. 6, and the second indication information may be the indication information 1 in the access response frame. After receiving the access request frame, the sink device may send an access response frame to the source device. The access response frame may include the second indication information.

Optionally, the first request information includes identification information of the first application.

Optionally, the first request information is carried in an access request frame, and the first response information is carried in an access response frame.

Optionally, that the first device receives the first indication information sent by the second device includes: The first device receives a video application transmission request message sent by the second device, where the video application transmission request message includes the first indication information.

For example, the video application transmission request message shown in FIG. 4 to FIG. 6 may include the first indication information. For example, the first indication information may be the indication information 2 in the video application transmission request message.

Optionally, that the first device receives the first indication information sent by the second device includes: The first device receives second request information sent by the second device, where the second request information is used to request to perform capability negotiation with the first device, and the second request information includes the first indication information.

Optionally, the second request information is carried in a video projection application capability negotiation request message, and the second response information is carried in a video projection application capability negotiation response message.

For example, the video projection application capability negotiation request message shown in FIG. 7 may include the first indication information. For example, the first indication information may be the indication information 2 in the video projection application capability negotiation request message.

Optionally, the method further includes: The first device sends second response information for the second request information to the second device, where the second response information includes second indication information, and the second indication information indicates a second technology stack type corresponding to the first application.

For example, the video projection application capability negotiation response message shown in FIG. 7 may include the second indication information. For example, the second indication information may be the indication information 1 in the video projection application capability negotiation response message.

S1102: Establish, based on the first indication information, a transmission channel that is based on the first technology stack type.

Optionally, the device that receives the first indication information may establish an SLB streaming media general management channel and an SLB multimedia data transmission channel. The SLB streaming media general management channel may be used to receive or send control plane signaling. The SLB multimedia data transmission channel may be used to receive or send control plane signaling.

S1103: Send signaling and/or data of the first application through the transmission channel, or receive signaling and/or data of the first application through the transmission channel.

Optionally, if the device that receives the first indication information is the source device, the source device may send the signaling and/or the data of the first application to the sink device through the transmission channel.

Optionally, if the device that receives the first indication information is the sink device, the sink device may receive, through the transmission channel, the signaling and/or the data of the first application that are/is sent by the source device.

Optionally, the first technology stack type includes an internet protocol IP technology stack or a non-IP technology stack.

Optionally, the IP technology stack or the non-IP technology stack may be further classified into a plurality of types of technology stacks. For example, the non-IP technology stack may be classified into a non-IP technology stack A or a non-IP technology stack B.

Embodiments of this application further provide an apparatus configured to implement any one of the foregoing methods. For example, the apparatus includes units (or means) configured to implement the steps performed by the source device or the sink device in any one of the foregoing methods.

FIG. 12 is a block diagram of a transmission apparatus 1200 according to an embodiment of this application. The transmission apparatus 1200 includes a first protocol layer processing unit 1201, a third protocol layer processing unit 1203, and a fourth protocol layer processing unit 1204. The first protocol layer processing unit 1201 is configured to send a device information disclosure request message to the third protocol layer processing unit 1203. The device information disclosure request message includes identification information of a first application and identification information of a first technology stack type. The third protocol layer processing unit 1203 is configured to receive the device information disclosure request message sent by the first protocol layer processing unit 1201, and send first indication information to the fourth protocol layer processing unit 1204. The first indication information indicates a first technology stack type corresponding to the first application. The fourth protocol layer processing unit 1204 is configured to: receive the first indication information sent by the third protocol layer processing unit 1203, and send the first indication information.

Optionally, the first indication information includes the identification information of the first application and identification information of the first technology stack type.

Optionally, the third protocol layer processing unit 1203 is specifically configured to send a scanning request message to the fourth protocol layer processing unit, where the scanning request message includes the first indication information.

Optionally, the third protocol layer processing unit 1203 is specifically configured to send a broadcast message to the fourth protocol layer processing unit 1204, where the broadcast message includes the first indication information. The fourth protocol layer processing unit 1204 is configured to send the broadcast message.

Optionally, the third protocol layer processing unit 1203 is specifically configured to send a system message to the fourth protocol layer processing unit 1204, where the system message includes the first indication information. The fourth protocol layer processing unit is configured to send the system message.

The foregoing describes a procedure of interaction between control planes of protocol stack processing units in the transmission apparatus that sends the first indication information. The following describes a procedure of interaction between control planes of protocol stack processing units in the transmission apparatus that receives the first indication information.

Optionally, the transmission apparatus 1200 further includes a second protocol stack processing unit 1202. The fourth protocol layer processing unit 1204 is configured to receive first indication information and send the first indication information to the third protocol layer processing unit 1203. The first indication information indicates a first technology stack type corresponding to a first application. The third protocol layer processing unit 1203 is configured to receive the first indication information sent by the fourth protocol layer processing unit 1204, and parse the first indication information to obtain identification information of the first application and identification information of the first technology stack type. The third protocol layer processing unit 1203 is further configured to send the identification information of the first application and the identification information of the first technology stack type to the first protocol layer processing unit 1201. The first protocol layer processing unit 1201 is further configured to: receive the identification information of the first application and the identification information of the first technology stack type that are sent by the third protocol layer processing unit, send the identification information of the first application and the identification information of the first technology stack type to the second protocol layer processing unit 1202, and send a first instruction to the third protocol layer processing unit 1203. The first instruction indicates the third protocol layer processing unit to establish a transmission channel based on the first technology stack type. The second protocol layer processing unit 1202 is configured to: receive the identification information of the first application and the identification information of the first technology stack type that are sent by the first protocol layer processing unit 1201, and select, based on the identification information of the first technology stack type, a first control and management module to perform capability negotiation. The third protocol layer processing unit 1203 is further configured to establish, based on the first instruction, a transmission channel that is based on the first technology stack type.

Optionally, the second protocol layer processing unit 1202 includes the first control and management module and a second control and management module. The first control and management module has a correspondence with the first technology stack type, and the second control and management module has a correspondence with a second technology stack type.

Optionally, the first protocol layer processing unit 1201 is further configured to: before receiving the identification information of the first application and the identification information of the first technology stack type that are sent by the third protocol layer processing unit 1203, send a device discovery request to the third protocol layer processing unit 1203. The device discovery request includes a scanning parameter, and the scanning parameter includes the identification information of the first application and the identification information of the first technology stack type. The third protocol layer processing unit 1203 is further configured to receive the device discovery request sent by the first protocol layer processing unit 1201, and send a scanning configuration command to the fourth protocol layer processing unit 1204. The scanning configuration command indicates that the scanning parameter of the fourth protocol layer processing unit 1204 includes the identification information of the first application and the identification information of the first technology stack type. The fourth protocol layer processing unit 1204 is further configured to receive the scanning configuration command sent by the third protocol layer processing unit 1203. The fourth protocol layer processing unit 1204 is further configured to receive the first indication information and report a scanning result based on the scanning configuration command.

Optionally, the fourth protocol layer processing unit 1204 is specifically configured to receive broadcast information based on the scanning configuration command, where the broadcast information includes the first indication information.

Optionally, the second protocol layer processing unit 1202 may be integrated into the first protocol layer processing unit.

Optionally, the first technology stack type includes an IP technology stack or a non-IP technology stack.

Optionally, the second protocol layer processing unit 1202 is further configured to select, based on the identification information of the first technology stack type, the first control and management module to perform session management, where session management includes session establishment, release, or termination.

Optionally, the second protocol layer processing unit 1202 is specifically configured to select, based on the identification information of the first technology stack type, the first control and management module to negotiate a video encoding and decoding capability.

Optionally, the fourth protocol layer processing unit 1204 is specifically configured to control an SLB air interface and/or an SLE air interface to receive the first indication information.

The foregoing describes a control plane interaction procedure in the transmission apparatus, and the following describes a data plane interaction procedure in the transmission apparatus.

Optionally, for the data transmission apparatus, the first protocol layer processing unit 1201 is configured to send data and identification information of a first technology stack type to the second protocol layer processing unit 1202. The second protocol layer processing unit 1202 is configured to receive the data and the identification information of the first technology stack type that are sent by the first protocol layer processing unit 1201. The second protocol layer processing unit 1202 is further configured to select, based on the identification information of the first technology stack type, a first data encapsulation module to encapsulate the data, to obtain encapsulated data. The second protocol layer processing unit 1202 is further configured to send the encapsulated data to the third protocol layer processing unit 1203. The third protocol layer processing unit 1203 is configured to receive the encapsulated data sent by the second protocol layer processing unit 1202, and process the encapsulated data to obtain processed data. The third protocol layer processing unit 1203 is further configured to send the processed data to the fourth protocol layer processing unit 1204. The fourth protocol layer processing unit 1204 is further configured to receive the processed data sent by the third protocol layer processing unit 1203, and send the processed data to a peer device.

Optionally, the second protocol layer processing unit 1202 includes the first data encapsulation module and a second data encapsulation module. The first data encapsulation module has a correspondence with the first technology stack type, and the second data encapsulation module has a correspondence with a second technology stack type.

Optionally, the third protocol layer processing unit 1203 is specifically configured to fragment or aggregate the encapsulated data, select a data transmission mode, and select an interface for transmitting data.

Optionally, the fourth protocol layer processing unit 1204 is specifically configured to control an SLB air interface and/or an SLE air interface to send the processed data to the peer end.

Optionally, for the data transmission apparatus, the fourth protocol layer processing unit 1204 is configured to receive processed data sent by a peer device, and send the processed data to the third protocol layer processing unit 1203. The third protocol layer processing unit 1203 is configured to receive the processed data sent by the fourth protocol layer processing unit 1204, and obtain encapsulated data based on the processed data. The third protocol layer processing unit 1203 is further configured to send the encapsulated data to the second protocol layer processing unit 1202. The second protocol layer processing unit 1202 is further configured to decapsulate the encapsulated data to obtain decapsulated data. The second protocol layer processing unit 1202 is further configured to send the decapsulated data to the first protocol layer processing unit 1201. The first protocol layer processing unit 1201 is further configured to receive the decapsulated data sent by the second protocol layer processing unit.

Optionally, the first protocol layer processing unit may correspond to the SparkLink basic application layer shown in FIG. 2A and FIG. 2B, the second protocol layer processing unit may correspond to the video configuration and transmission management sublayer shown in FIG. 2A and FIG. 2B, the third protocol layer processing unit may correspond to the SparkLink basic service layer shown in FIG. 2A and FIG. 2B, and the fourth protocol layer processing unit may correspond to the SparkLink access layer shown in FIG. 2A and FIG. 2B.

The first protocol layer processing unit, the second protocol layer processing unit, the third protocol layer processing unit, and the fourth protocol layer processing unit may be physical units, or may be virtual units.

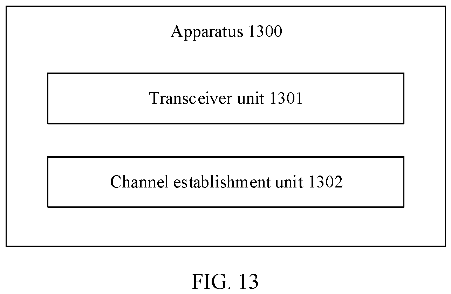

FIG. 13 is a block diagram of a transmission apparatus 1300 according to an embodiment of this application. As shown in FIG. 13, the apparatus 1300 includes: a transceiver unit 1301, configured to receive first indication information, where the first indication information indicates a first technology stack type corresponding to a first application; a channel establishment unit 1302, configured to establish, based on the first indication information, a transmission channel that is based on the first technology stack type; and the transceiver unit 1301 is further configured to: send signaling and/or data of the first application through the transmission channel, or receive signaling and/or data of the first application through the transmission channel.

Optionally, the transceiver unit 1301 is specifically configured to: receive the first indication information from a first device; and send the signaling and/or the data of the first application to the first device through the transmission channel.

Optionally, the transceiver unit 1301 is specifically configured to: receive broadcast information from the first device, where the broadcast information includes the first indication information; and the transceiver unit 1301 is further configured to send first request information to the first device, where the first request information is used to request to access the first device.

Optionally, the broadcast information includes an SLB system message or an SLE broadcast message.

Optionally, the apparatus 1300 further includes: a determining unit, configured to: before the channel establishment unit 1302 establishes the transmission channel based on the first technology stack type, determine that the first technology stack type matches a second protocol stack type corresponding to the first application in a second device.

Optionally, the transceiver unit 1301 is further configured to: before receiving the first indication information from the first device, send first request information to the first device, where the first request information is used to request to access the first device; and the transceiver unit 1301 is specifically configured to: receive first response information for the first request information from the first device, where the first response information includes the first indication information.

Optionally, the first request information includes identification information of the first application.

Optionally, the first request information is carried in an access request frame, and the first response information is carried in an access response frame.

Optionally, the transceiver unit 1301 is further configured to: before receiving the first indication information from the first device, send second request information to the first device, and the second request information is used to request to perform capability negotiation with the first device; and the transceiver unit 1301 is specifically configured to receive second response information for the second request information from the first device, where the second response information includes the first indication information.

Optionally, the second request information is carried in a video projection application capability negotiation request message, and the second response information is carried in a video projection application capability negotiation response message.

Optionally, the second request information includes identification information of the first application.

Optionally, the second request information includes second indication information, and the second indication information indicates a second technology stack type corresponding to the first application.

Optionally, the transceiver unit 1301 is specifically configured to: receive the first indication information sent by a second device; and receive the signaling and/or the data of the first application sent by the second device through the transmission channel.

Optionally, the transceiver unit 1301 is further configured to: before receiving the first indication information sent by the second device, send broadcast information, where the broadcast information includes second indication information, and the second indication information indicates a second technology stack type corresponding to the first application; and receiving first access request information sent by the second device, where the first access request information is used to request to access a first device.

Optionally, the broadcast information includes an SLB system message or an SLE broadcast message.

Optionally, the transceiver unit 1301 is further configured to: before receiving the first indication information from the second device, receive first request information from the second device, where the first request information is used to request to access a first device; and send first response information for the first request information to the second device, where the first response information includes second indication information, and the second indication information indicates a second technology stack type corresponding to the first application.

Optionally, the first request information includes identification information of the first application.

Optionally, the first request information is carried in an access request frame, and the first response information is carried in an access response frame.

Optionally, the transceiver unit 1301 is specifically configured to receive a video application transmission request message sent by the second device, where the video application transmission request message includes the first indication information.

Optionally, the transceiver unit 1301 is specifically configured to: receive second request information sent by the second device, where the second request information is used to request to perform capability negotiation with the first device, and the second request information includes the first indication information.

Optionally, the transceiver unit 1301 is further configured to send second response information for the second request information to the second device, where the second response information includes second indication information, and the second indication information indicates a second technology stack type corresponding to the first application.

Optionally, the second request information is carried in a video projection application capability negotiation request message, and the second response information is carried in a video projection application capability negotiation response message.

Optionally, the first technology stack type includes an internet protocol IP technology stack or a non-IP technology stack.

It should be understood that division of units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

The storage unit may be a memory, and the processing unit may be a processor.

An embodiment of this application further provides a terminal. The terminal may include the foregoing apparatus.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmission method, comprising:
receiving first indication information, wherein the first indication information indicates a first technology stack type corresponding to a first application;
establishing, based on the first indication information, a transmission channel that is based on the first technology stack type; and
sending signaling and/or data of the first application through the transmission channel, or receiving signaling and/or data of the first application through the transmission channel.

2. The method according to claim 1, wherein the receiving first indication information comprises:
receiving the first indication information from a first device; and
the sending signaling and/or data of the first application through the transmission channel, or receiving signaling and/or data of the first application through the transmission channel comprises:
sending the signaling and/or the data of the first application to the first device through the transmission channel.

3. The method according to claim 2, wherein the receiving the first indication information from a first device comprises:
receiving broadcast information from the first device, wherein the broadcast information comprises the first indication information; and
sending first request information to the first device, wherein the first request information is used to request to access the first device.

4. The method according to claim 3, wherein the broadcast information comprises a SparkLink basic SLB system message or a SparkLink low energy SLE broadcast message.

5. The method according to claim 3 or 4, wherein before the establishing a transmission channel that is based on the first technology stack type, the method further comprises:
determining that the first technology stack type matches a second protocol stack type corresponding to the first application in a second device.

6. The method according to claim 2, wherein before the receiving the first indication information from a first device, the method further comprises:
sending first request information to the first device, wherein the first request information is used to request to access the first device; and
the receiving the first indication information from a first device comprises:
receiving first response information for the first request information from the first device, wherein the first response information comprises the first indication information.

7. The method according to claim 6, wherein the first request information comprises identification information of the first application.

8. The method according to claim 6 or 7, wherein the first request information is carried in an access request frame, and the first response information is carried in an access response frame.

9. The method according to claim 2, wherein before the receiving the first indication information from a first device, the method further comprises:
sending second request information to the first device, wherein the second request information is used to request to perform capability negotiation with the first device; and
the receiving the first indication information from a first device comprises:
receiving second response information for the second request information from the first device, wherein the second response information comprises the first indication information.

10. The method according to claim 9, wherein the second request information is carried in a video projection application capability negotiation request message, and the second response information is carried in a video projection application capability negotiation response message.

11. The method according to claim 9 or 10, wherein the second request information comprises identification information of the first application.

12. The method according to claim 9 or 10, wherein the second request information comprises second indication information, and the second indication information indicates a second technology stack type corresponding to the first application.

13. The method according to claim 1, wherein the receiving first indication information comprises:
receiving the first indication information from a second device; and
the sending signaling and/or data of the first application through the transmission channel, or receiving signaling and/or data of the first application through the transmission channel comprises:
receiving the signaling and/or the data of the first application from the second device through the transmission channel.

14. The method according to claim 13, wherein before the receiving the first indication information from a second device, the method further comprises:
sending broadcast information, wherein the broadcast information comprises second indication information, and the second indication information indicates a second technology stack type corresponding to the first application.

15. The method according to claim 14, wherein the broadcast information comprises a SparkLink basic SLB system message or a SparkLink low energy SLE broadcast message.

16. The method according to claim 13, wherein before the receiving the first indication information from a second device, the method further comprises:
receiving first request information from the second device, wherein the first request information is used to request to access a first device; and
sending first response information for the first request information to the second device, wherein the first response information comprises second indication information, and the second indication information indicates a second technology stack type corresponding to the first application.

17. The method according to claim 16, wherein the first request information comprises identification information of the first application.

18. The method according to claim 16 or 17, wherein the first request information is carried in an access request frame, and the first response information is carried in an access response frame.

19. The method according to any one of claims 13 to 18, wherein the receiving the first indication information from a second device comprises:
receiving a video application transmission request message from the second device, wherein the video application transmission request message comprises the first indication information.

20. The method according to claim 13, wherein the receiving the first indication information from a second device comprises:
receiving second request information from the second device, wherein the second request information is used to request to perform capability negotiation with the first device, and the second request information comprises the first indication information.

21. The method according to claim 20, wherein the method further comprises:
sending second response information for the second request information to the second device, wherein the second response information comprises second indication information, and the second indication information indicates a second technology stack type corresponding to the first application.

22. The method according to claim 20 or 21, wherein the second request information is carried in a video projection application capability negotiation request message, and the second response information is carried in a video projection application capability negotiation response message.

23. The method according to any one of claims 1 to 22, wherein the first technology stack type comprises an internet protocol IP technology stack or a non-IP technology stack.

24. A transmission apparatus, comprising:
a transceiver unit, configured to receive first indication information, wherein the first indication information indicates a first technology stack type corresponding to a first application;
a channel establishment unit, configured to establish, based on the first indication information, a transmission channel that is based on the first technology stack type; and
the transceiver unit is further configured to: send signaling and/or data of the first application through the transmission channel, or receive signaling and/or data of the first application through the transmission channel.

25. The apparatus according to claim 24, wherein the transceiver unit is specifically configured to:
receive the first indication information from a first device; and
send the signaling and/or the data of the first application to the first device through the transmission channel.

26. The apparatus according to claim 25, wherein the transceiver unit is specifically configured to:
receive broadcast information from the first device, wherein the broadcast information comprises the first indication information; and
the transceiver unit is further configured to send first request information to the first device, wherein the first request information is used to request to access the first device.

27. The apparatus according to claim 26, wherein the broadcast information comprises an SLB system message or an SLE broadcast message.

28. The apparatus according to claim 26 or 27, wherein the apparatus further comprises:
a determining unit, configured to: before the channel establishment unit establishes the transmission channel based on the first technology stack type, determine that the first technology stack type matches a second protocol stack type corresponding to the first application in a second device.

29. The apparatus according to claim 25, wherein the transceiver unit is further configured to: before receiving the first indication information from the first device, send first request information to the first device, wherein the first request information is used to request to access the first device; and
the transceiver unit is specifically configured to:
receive first response information for the first request information from the first device, wherein the first response information comprises the first indication information.

30. The apparatus according to claim 29, wherein the first request information comprises identification information of the first application.

31. The apparatus according to claim 29 or 30, wherein the first request information is carried in an access request frame, and the first response information is carried in an access response frame.

32. The apparatus according to claim 25, wherein the transceiver unit is further configured to: before receiving the first indication information from the first device, send second request information to the first device, and the second request information is used to request to perform capability negotiation with the first device; and
the transceiver unit is specifically configured to receive second response information for the second request information from the first device, wherein the second response information comprises the first indication information.

33. The apparatus according to claim 32, wherein the second request information is carried in a video projection application capability negotiation request message, and the second response information is carried in a video projection application capability negotiation response message.

34. The apparatus according to claim 32 or 33, wherein the second request information comprises identification information of the first application.

35. The apparatus according to claim 32 or 33, wherein the second request information comprises second indication information, and the second indication information indicates a second technology stack type corresponding to the first application.

36. The apparatus according to claim 24, wherein the transceiver unit is specifically configured to:
receive the first indication information from a second device; and
receive the signaling and/or the data of the first application from the second device through the transmission channel.

37. The apparatus according to claim 36, wherein
the transceiver unit is further configured to: before receiving the first indication information from the second device, send broadcast information, wherein the broadcast information comprises second indication information, and the second indication information indicates a second technology stack type corresponding to the first application; and
receiving first access request information from the second device, wherein the first access request information is used to request to access a first device.

38. The apparatus according to claim 37, wherein the broadcast information comprises an SLB system message or an SLE broadcast message.

39. The apparatus according to claim 36, wherein
the transceiver unit is further configured to: before receiving the first indication information from the second device, receive first request information from the second device, wherein the first request information is used to request to access a first device; and
send first response information for the first request information to the second device, wherein the first response information comprises second indication information, and the second indication information indicates a second technology stack type corresponding to the first application.

40. The apparatus according to claim 39, wherein the first request information comprises identification information of the first application.

41. The apparatus according to claim 39 or 40, wherein the first request information is carried in an access request frame, and the first response information is carried in an access response frame.

42. The apparatus according to any one of claims 36 to 41, wherein the transceiver unit is specifically configured to:
receive a video application transmission request message from the second device, wherein the video application transmission request message comprises the first indication information.

43. The apparatus according to claim 36, wherein the transceiver unit is specifically configured to:
receive second request information from the second device, wherein the second request information is used to request to perform capability negotiation with the first device, and the second request information comprises the first indication information.

44. The apparatus according to claim 43, wherein
the transceiver unit is further configured to send second response information for the second request information to the second device, wherein the second response information comprises second indication information, and the second indication information indicates a second technology stack type corresponding to the first application.

45. The apparatus according to claim 43 or 44, wherein the second request information is carried in a video projection application capability negotiation request message, and the second response information is carried in a video projection application capability negotiation response message.

46. The apparatus according to any one of claims 24 to 45, wherein the first technology stack type comprises an internet protocol IP technology stack or a non-IP technology stack.

47. A transmission apparatus, wherein the transmission apparatus comprises a processor and a memory, the memory is configured to store program instructions, and the processor is configured to invoke the program instructions to perform the method according to any one of claims 1 to 23.

48. A terminal, wherein the terminal comprises the apparatus according to any one of claims 24 to 47.

49. A computer-readable storage medium, wherein the computer-readable medium stores program code, and when the program code is run on a computer, the computer is enabled to perform the method according to any one of claims 1 to 23.
